# EUROPEAN PATENT SPECIFICATION

(11) **EP 4 603 314 B1**
(45) Date of publication and mention of the grant of the patent: **05.08.2026**
(21) Application number: 24157992.9
(22) Date of filing: 16.02.2024
(51) Int. Cl.: B60K 15/03, F02D 19/02

(54) **METHOD OF ESTIMATING OCCURRENCES OF VENTING OF FUEL GAS FROM A FUEL GAS SYSTEM, COMPUTER PROGRAM, COMPUTER-READABLE MEDIUM, CONTROL ARRANGEMENT, AND VEHICLE**
VERFAHREN ZUR SCHÄTZUNG DES AUFTRETENS VON ENTLÜFTUNG VON BRENNGAS AUS EINEM BRENNGASSYSTEM, COMPUTERPROGRAMM, COMPUTERLESBARES MEDIUM, STEUERUNGSANORDNUNG UND FAHRZEUG
PROCÉDÉ D'ESTIMATION D'OCCURRENCES DE VENTILATION DE GAZ COMBUSTIBLE D'UN SYSTÈME DE GAZ COMBUSTIBLE, PROGRAMME INFORMATIQUE, SUPPORT LISIBLE PAR ORDINATEUR, AGENCEMENT DE COMMANDE ET VÉHICULE

(43) Date of publication of application: 20.08.2025
(73) Proprietor: Scania CV AB, 151 87 Södertälje (SE)
(72) Inventor: GRALDE STÅLHANDSKE, Marcus, 142 65 Trångsund (SE); KARELIUSSON, Joakim, 129 57 Hägersten (SE)
(74) Representative: Scania CV AB

(56) References cited:
- EP-B1- 3 386 792
- US-B2- 11 493 378

## Description

### TECHNICAL FIELD

The present disclosure relates to a method of estimating occurrences of venting of fuel gas from a fuel gas system of a vehicle, wherein the fuel gas system is configured to supply fuel gas to a power source of the vehicle. The present disclosure further relates to a computer program, a computer-readable medium, a control arrangement configured to estimate occurrences of venting of fuel gas from a fuel gas system of a vehicle, and a vehicle comprising a control arrangement.

### BACKGROUND

Fuel gas is any one of a number of fuels that under ordinary ambient temperature and pressure conditions are gaseous. Many fuel gases are composed of hydrocarbons, such as methane, butane, or propane, or mixtures thereof. Some examples of different types of fuel gas are compressed natural gas (CNG), liquified natural gas (LNG), and Hydrogen (H2).

Trucks, in particular, which run on Methane fuel are commonly fitted with a fuel system with either compressed Methane or cryogenic Methane. This methane fuel can be derived from various sources. When sourced from fossil gas, it is known as Compressed Natural Gas (CNG) or Liquefied Natural Gas (LNG). Alternatively, when derived from biological processes, such as from manure, garbage, or crops, it is referred to as Compressed Bio-gas (CBG) or Liquefied Bio-gas (LBG).

The inherent low density of gaseous fuels poses a significant challenge in achieving adequate vehicular range, a constraint less prevalent in vehicles powered by a gasoline or diesel. To address this, methane-fuelled trucks often feature extensive tank systems, occupying large portions of the vehicle's sides, to ensure sufficient fuel capacity. An alternative method to enhance range involves cooling the fuel to a cryogenic state, thereby increasing its density. In this context, methane is typically stored at temperatures ranging between -130°C and -120°C, while hydrogen requires even lower temperatures, below - 250°C. The tanks designed for this purpose are cryogenic, effectively minimizing heat transfer from the surroundings to the fuel, which maintains a two-phase state, comprising both liquid and gas forms.

Despite the efficiency of these cryogenic tanks in reducing heat ingress, ambient temperatures inevitably cause gradual heating of the fuel. This process leads to a progressive increase in pressure within the tank. To manage this, the system incorporates pressure relief valves configured to vent fuel gas from a tank when the pressure in the tank reaches above a threshold pressure, typically at 16 and 24 bar for methane, with slightly higher limits for hydrogen. These pressure release valves play a crucial role in preventing excessive pressure buildup and ensuring the structural integrity of the tank.

As understood from the above described, vehicles which are left unattended may cause release of fuel gas into the atmosphere due to the inevitable transfer of heat from the surroundings to the fuel gas in the tanks. Methane, while being an efficient fuel, is also a potent greenhouse gas. Its release into the atmosphere, even in seemingly small quantities, can have a large impact on global warming. This is because methane has a higher global warming potential than carbon dioxide over a shorter time frame.

Similarly, hydrogen, while not a greenhouse gas in its molecular form, can have indirect environmental impacts. In the atmosphere, it interacts with hydroxyl radicals, which play a key role in breaking down methane, a significant greenhouse gas. An increase in atmospheric hydrogen could reduce these hydroxyl radicals. This reduction may indirectly allow methane to persist longer in the atmosphere, potentially contributing to global warming.

Moreover, regardless of the particular type of fuel gas, the release of fuel gas into the atmosphere is an environmental concern because of the fact that fuel gas is wasted instead of being used for beneficial purposes, such as for providing motive power to a vehicle.

When activating a parked vehicle, it can be difficult to assess whether fuel gas has been vented from one or more tanks of the vehicle. Existing solutions can utilize level sensors, which commonly measure the dielectric properties of the fuel gas to infer its level. The dielectric properties vary between the liquid and gaseous phases, which serves as a basis for assessing fuel levels by these types of sensors. However, this approach has a notable limitation in that the accuracy of such level sensors is not always sufficient to conclusively determine if fuel gas has been vented from the tanks.

Currently, many vehicle owners and operators remain uncertain about whether, and how much, fuel gas is vented from their vehicles while parked. This lack of awareness is particularly relevant as numerous customers and users are actively engaged in environmental efforts. For them, having knowledge about the extent of fuel gas venting from their parked vehicles would be highly beneficial, aligning with their commitment to environmental responsibility. Moreover, this knowledge would enable owners and operators to take necessary measures to prevent future venting of fuel gas into the atmosphere, thereby enhancing their environmental responsibility.

Furthermore, obviously, the release of fuel gas into the atmosphere results in direct financial implications due to the loss of valuable fuel resources. This unnecessary waste translates into increased operational costs for vehicle owners and operators. EP3386792 discloses a method for determining time data relating to a non-combustion outlet process of a fuel gas from a gas tank at a vehicle using a model according to the preamble of claim 1 and a control arrangement configured to estimate occurrences of venting of fuel gas from a fuel gas system of a vehicle according to the preamble of claim 18.

### SUMMARY

It is an object of the present invention to overcome, or at least alleviate, at least some of the above-mentioned problems and drawbacks. The object is achieved by the subject-matter of the appended independent claim(s).

According to a first aspect of the present disclosure, the object is achieved by a method of estimating occurrences of venting of fuel gas from a fuel gas system of a vehicle, wherein the fuel gas system is configured to supply fuel gas to a power source of the vehicle, and wherein the fuel gas system comprises a first pressure tank and a first pressure relief valve configured to initiate venting of fuel gas from the first pressure tank when the pressure in the first pressure tank reaches above a first threshold pressure. The method comprises the steps of:
- storing data representative of current time and date, a current pressure in the first pressure tank, and a current fuel level in the first pressure tank during a shutdown phase of the vehicle,
- obtaining a first time estimate at which the first pressure relief valve is estimated to initiate venting based on the stored data and a model for the state of fuel gas in the first pressure tank, and after a standstill period starting at the shutdown phase of the vehicle:
- estimating if the first pressure relief valve has initiated venting during the standstill period by checking if the first time estimate is within the standstill period.

Thereby, a method is provided capable of estimating if fuel gas has been vented from the first pressure tank during the standstill period in a simple and efficient manner. The estimation can be made in a simple and efficient manner because the data needed can be derived from already existing sensors or systems of the vehicle and/or can be derived from inexpensive and non-complex sensors. Accordingly, a method is provided capable of estimating if fuel gas has been vented from the first pressure tank during the standstill period without significantly adding complexity or costs to the vehicle.

In other words, a method is provided capable of generating an estimation which can be used to inform owners and operators allowing them to take necessary measures to prevent future venting of fuel gas into the atmosphere. As a further result, conditions are provided for allowing owners and operators to enhance their environmental responsibility and lowering their operational costs, while not significantly adding complexity or costs to the vehicle.

Accordingly, a method is provided overcoming, or at least alleviating, at least some of the above-mentioned problems and drawbacks. As a result, the above-mentioned object is achieved.

Optionally, the step of obtaining the first time estimate is performed during a startup phase of the vehicle.

Thereby, a method is provided capable of lowering the need for data processing and calculations during a shutdown phase of the vehicle, thereby providing conditions for a lowered energy usage during the shutdown phase and conditions for a reduced waiting time before performing an electric shutdown of a control arrangement of the vehicle. In addition, a method is provided providing conditions for inputting more accurate data to the model for the state of fuel gas in the first pressure tank.

Optionally, the step of estimating if the first pressure relief valve has initiated venting is performed during a startup phase of the vehicle.

Thereby, a method is provided capable of lowering the need for performing data processing and calculations during a standstill period of the vehicle. Moreover, conditions are provided for informing owners and operators during the startup phase of the vehicle of whether it is estimated that fuel gas has been vented from the first pressure tank during the standstill period of the vehicle. This can thus allow them to take necessary measures to prevent future venting of fuel gas into the atmosphere.

Optionally, the method comprises the step of:
- inputting a temperature data estimate to the model, wherein the temperature data estimate is representative estimated ambient temperature during the standstill period. Thereby, a method is provided capable of providing more accurate and reliable estimates of whether the first pressure relief valve has initiated venting during the standstill. This is because the ambient temperature during a standstill period influences the risk of occurrences of venting of fuel gas from a fuel gas system of a vehicle.

Optionally, the method comprises the step of:
- inputting a fuel gas composition estimate to the model, wherein the fuel gas composition estimate is representative an estimated composition of the fuel gas in the first pressure tank at the shutdown phase of the vehicle.

Thereby, a method is provided capable of providing more accurate and reliable estimates of whether the first pressure relief valve has initiated venting during the standstill. This is because the composition of the fuel gas in the first pressure tank at the shutdown phase of the vehicle influences the risk of occurrences of venting of fuel gas from a fuel gas system of a vehicle.

Optionally, the vehicle comprises an input unit allowing a user to input a fuel gas composition estimate, and wherein the step of inputting a fuel gas composition estimate comprises the step of:
- inputting a fuel gas composition estimate to the model from the input unit.

Optionally, the method comprises the steps of, if the first time estimate is within the standstill period:
- calculating a duration of a time period between the first time estimate and an end of the standstill period, and
- estimating an amount of fuel gas vented via the first pressure relief valve during the standstill period based on the stored data, the model, and the duration of the time period.

Thereby, a method is provided capable of estimating the amount of fuel gas vented via the first pressure relief valve during the standstill period in a simple and efficient manner. As above, the estimation can be made in a simple and efficient manner because the data needed can be derived from already existing sensors or systems of the vehicle and/or can be derived from inexpensive and non-complex sensors. Accordingly, a method is provided capable of estimating the amount of fuel gas vented from the first pressure tank during the standstill period without significantly adding complexity or costs to the vehicle.

Moreover, a method is provided capable of generating an estimation which can be used to inform owners and operators about the amount of fuel gas vented allowing them to take necessary measures to reduce future amounts of vented fuel gas into the atmosphere. As a further result, improved conditions are provided for enhancing the environmental responsibility and lowering operational costs for owners and operators, while not significantly adding complexity or costs to the vehicle.

Optionally, the method comprises the step of, during a startup phase of the vehicle,
- measuring a pressure in the first pressure tank, and
- determining an accuracy of the estimation of whether the first pressure relief valve has initiated venting during the standstill period based on the measured pressure.

Thereby, the accuracy of the estimation of whether the first pressure relief valve has initiated venting during the standstill period can be determined in a simple and efficient manner. As above, the accuracy of the estimation can be determined in a simple and efficient manner because the data needed can be derived from already existing sensors or systems of the vehicle and/or can be derived from inexpensive and non-complex sensors.

Optionally, the method comprises the step of:
- updating at least one parameter of the model if the determined accuracy is below a threshold accuracy.

Thereby, a method is provided having conditions for adapting and provide conditions for improved future estimations of whether fuel gas has been vented from the first pressure tank.

Optionally, the method comprises the step of, during a startup phase of the vehicle:
- measuring a pressure in the first pressure tank, and
- generating a first type of error code if the measured pressure is outside of a predetermined pressure range and the first time estimate is within the standstill period.

Thereby, a method is provided having conditions for generating data which can be used to perform a simple and efficient diagnosis of the operation of the fuel gas system of the vehicle, including operation of the first pressure relief valve of the fuel gas system. Moreover, a method is provided having conditions for generating data which can be used to adapt and improve future estimations of whether fuel gas has been vented from the first pressure tank.

Optionally, the method comprises the step of, during a startup phase of the vehicle:
- measuring a pressure in the first pressure tank, and
- generating a second type of error code if the measured pressure is within a predetermined pressure range and the first time estimate is not within the standstill period.

Thereby, a method is provided having conditions for generating data which can be used to perform a simple and efficient diagnosis of the operation of the fuel gas system of the vehicle, including operation of the first pressure relief valve of the fuel gas system. Moreover, a method is provided having conditions for generating data which can be used to adapt and improve future estimations of whether fuel gas has been vented from the first pressure tank.

The wording "first type of error code" and "second type of error code" as used herein means that the second type of error code is distinguishable from the first type of error code and vice versa.

Optionally, the fuel gas system comprises a supply conduit configured to supply fuel gas from the first pressure tank to the power source of the vehicle, a pressure sensor configured to measure a pressure in the supply conduit, and a first valve controllable between an open state and a closed state to open and close a fluid connection between the first pressure tank and the supply conduit, and wherein the method comprises the step of:
- controlling the first valve to the open state during a startup phase of the vehicle,
and wherein the step of measuring the pressure in the first pressure tank comprises the step of:
- inputting data from the pressure sensor.

Thereby, a method is provided capable of utilizing data from an already existing sensor of the vehicle and/or from an inexpensive and non-complex sensor for measuring the pressure in the first pressure tank. In addition, the need for arranging several pressure sensors is circumvented in embodiments in which the fuel gas system comprises more than one pressure tank.

Optionally, the fuel gas system comprises a pressure sensor configured to provide data representative of a current pressure in the first pressure tank, and wherein the step of storing data during the shutdown phase of the vehicle comprises the step of:
- storing data from the pressure sensor.

Thereby, reliable, and accurate data representative of the current pressure in the first pressure tank can be stored during the shutdown phase of the vehicle. As a further result, conditions are provided for performing more accurate estimations of whether fuel gas has been vented from the first pressure tank.

Optionally, the fuel gas system comprises a first level sensor configured to provide data representative of a current fuel level in the first pressure tank, and wherein the step of storing data during the shutdown phase of the vehicle comprises the step of:
- storing data from the first level sensor.

Thereby, data representative of the current fuel level in the first pressure tank can be stored in a simple and efficient manner during the shutdown phase of the vehicle.

Optionally, the fuel gas system comprises a second pressure tank and a second pressure relief valve configured to initiate venting of fuel gas from the second pressure tank when the pressure in the second pressure tank reaches above a second threshold pressure, wherein the method comprises the steps of:
- storing data representative of a current pressure in the second pressure tank and a current fuel level in the second pressure tank during a shutdown phase of the vehicle,
- obtaining a second time estimate at which the second pressure relief valve is estimated to initiate venting based on the stored data and a model for the state of fuel gas in the second pressure tank, and
after a standstill period starting at the shutdown phase of the vehicle:
- estimating if the second pressure relief valve has initiated venting during the standstill period by checking if the second time estimate is within the standstill period.

Thereby, a method is provided capable of estimating if fuel gas has been vented from the first and second pressure tanks during the standstill period in a simple and efficient manner. As above, the estimation can be made in a simple and efficient manner because the data needed can be derived from already existing sensors or systems of the vehicle and/or can be derived from inexpensive and non-complex sensors. Accordingly, a method is provided capable of estimating if fuel gas has been vented from the first and second pressure tanks during the standstill period without significantly adding complexity or costs to the vehicle.

Optionally, the fuel gas system comprises a supply conduit configured to supply fuel gas from each of the first and second pressure tanks to the power source of the vehicle, a first valve controllable between an open state and a closed state to open and close a fluid connection between the first pressure tank and the supply conduit, and a second valve controllable between an open state and a closed state to open and close a fluid connection between the second pressure tank and the supply conduit, wherein the method comprises the steps of:
- controlling the first valve to the open state before controlling the second valve to the open state if the first time estimate precedes the second time estimate, and
- controlling the second valve to the open state before controlling the first valve to the open state if the first time estimate is after the second time estimate.

Thereby, conditions are provided for generating error codes, and/or determining an accuracy of an estimation of whether a pressure relief valve has initiated venting during a standstill period, without significantly adding costs or complexity to the vehicle. This is because a pressure sensor arranged to sense a current pressure in the supply conduit can be used to determine a current pressure after the standstill period in whichever of the first and second pressure tanks that is most likely to have vented fuel gas from its pressure relief valve during the standstill period.

According to a second aspect of the present disclosure, the object is achieved by a computer program comprising instructions to cause the control arrangement according to the second aspect of the present disclosure to execute the steps of the method according to some embodiments of the first aspect of the present disclosure. Since the computer program comprises instructions to cause the control arrangement to carry out the method according to some embodiments described herein, a computer program is provided which provides conditions for overcoming, or at least alleviating, at least some of the above-mentioned drawbacks. As a result, the above-mentioned object is achieved.

According to a third aspect of the present disclosure, the object is achieved by a computer-readable medium having stored thereon the computer program according to the second aspect of the present disclosure. Since the computer-readable medium comprises instructions to cause the control arrangement to carry out the method according to some embodiments described herein, a computer-readable medium is provided which provides conditions for overcoming, or at least alleviating, at least some of the above-mentioned drawbacks. As a result, the above-mentioned object is achieved.

According to a fourth aspect of the present disclosure, the object is achieved by a control arrangement configured to estimate occurrences of venting of fuel gas from a fuel gas system of a vehicle, wherein the fuel gas system is configured to supply fuel gas to a power source of the vehicle, and wherein the fuel gas system comprises a first pressure tank and a first pressure relief valve configured to initiate venting of fuel gas from the first pressure tank when the pressure in the first pressure tank reaches above a first threshold pressure, wherein the control arrangement is configured to:
- store data representative of current time and date, a current pressure in the first pressure tank, and a current fuel level in the first pressure tank during a shutdown phase of the vehicle,
- obtain a first time estimate at which the first pressure relief valve is estimated to initiate venting based on the stored data and a model for the state of fuel gas in the first pressure tank, and
after a standstill period starting at the shutdown phase of the vehicle:
- estimate if the first pressure relief valve has initiated venting during the standstill period by checking if the first time estimate is within the standstill period.

Thereby, a control arrangement is provided capable of estimating if fuel gas has been vented from the first pressure tank during the standstill period in a simple and efficient manner. The estimation can be made in a simple and efficient manner because the data needed can be derived from already existing sensors or systems of the vehicle and/or can be derived from inexpensive and non-complex sensors. Accordingly, a control arrangement is provided capable of estimating if fuel gas has been vented from the first pressure tank during the standstill period without significantly adding complexity or costs to the vehicle.

In other words, a control arrangement is provided capable of generating an estimation which can be used to inform owners and operators allowing them to take necessary measures to prevent future venting of fuel gas into the atmosphere. As a further result, conditions are provided for allowing owners and operators to enhance their environmental responsibility and lowering their operational costs, while not significantly adding complexity or costs to the vehicle.

Accordingly, a control arrangement is provided overcoming, or at least alleviating, at least some of the above-mentioned problems and drawbacks. As a result, the above-mentioned object is achieved.

It will be appreciated that the various embodiments described for the method are all combinable with the control arrangement as described herein. That is, the control arrangement according to the fourth aspect of the invention may be configured to perform any one of the method steps of the method according to the first aspect of the invention.

According to a fifth aspect of the present disclosure, the object is achieved by a vehicle comprising a power source and a fuel gas system configured to supply fuel gas to the power source, wherein the fuel gas system comprises a first pressure tank and a first pressure relief valve configured to initiate venting of fuel gas from the first pressure tank when the pressure in the first pressure tank reaches above a first threshold pressure, and wherein the vehicle comprises a control arrangement according to the fourth aspect of the present disclosure.

Since the vehicle comprises a control arrangement according to the fourth aspect of the present disclosure, a vehicle is provided comprising a control arrangement capable of estimating if fuel gas has been vented from the first pressure tank during the standstill period of the vehicle in a simple and efficient manner.

As above, the estimation can be made in a simple and efficient manner because the data needed can be derived from already existing sensors or systems of the vehicle and/or can be derived from inexpensive and non-complex sensors. Accordingly, a vehicle is provided comprising a control arrangement capable of estimating if fuel gas has been vented from the first pressure tank during the standstill period without significantly adding complexity or costs to the vehicle.

In other words, a vehicle is provided having conditions for allowing owners and operators to take necessary measures to prevent future venting of fuel gas into the atmosphere. As a further result, conditions are provided for allowing owners and operators to enhance their environmental responsibility and lowering their operational costs, while not significantly adding complexity or costs to the vehicle.

Accordingly, a vehicle is provided overcoming, or at least alleviating, at least some of the above-mentioned problems and drawbacks. As a result, the above-mentioned object is achieved.

Optionally, the first pressure tank is a cryogenic tank configured to store the fuel gas at least partially in liquid form and at a temperature below ambient temperature. Thereby, a vehicle is provided having conditions for storing fuel gas in a space-efficient manner while comprising a control arrangement capable of estimating if fuel gas has been vented from the cryogenic tank during the standstill periods of the vehicle in a simple and efficient manner.

Optionally, the vehicle is a heavy road vehicle, such as a truck or a bus. Thereby, a heavy road vehicle is provided having at least some of the above-mentioned advantages.

Further features of, and advantages with, the present invention will become apparent when studying the appended claims and the following detailed description.

### BRIEF DESCRIPTION OF THE DRAWINGS

Various aspects of the present disclosure, including its particular features and advantages, will be readily understood from the example embodiments discussed in the following detailed description and the accompanying drawings, in which:
Fig. 1 schematically illustrates a vehicle according to some embodiments,
Fig. 2 schematically illustrates a fuel gas system and a power source of the vehicle illustrated in Fig. 1,
Fig. 3 illustrates a graph comprising a horizontal axis showing time and a vertical axis showing current pressures in a first and a second pressure tank of the fuel gas system illustrated in Fig. 2,
Fig. 4 schematically illustrates a method of estimating occurrences of venting of fuel gas from a fuel gas system of a vehicle, and
Fig. 5 illustrates a computer-readable medium.

### DETAILED DESCRIPTION

Aspects of the present disclosure will now be described more fully. Like reference signs refer to like elements throughout. Well-known functions or constructions will not necessarily be described in detail for brevity and/or clarity.

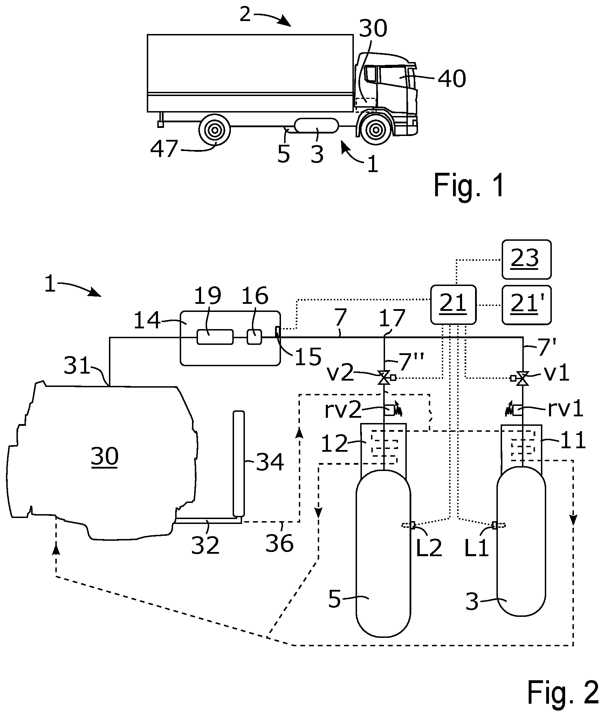

**Fig. 1** schematically illustrates a vehicle 2 according to some embodiments. According to the illustrated embodiments, the vehicle 2 is a truck, i.e., a type of a heavy road vehicle. According to further embodiments, the vehicle 2, as referred to herein, may be another type of heavy or lighter type of manned or unmanned vehicle for land or water-based propulsion such as a lorry, a bus, a construction vehicle, a tractor, a car, a ship, a boat, or the like.

The vehicle 2 comprises a power source 30. According to the illustrated embodiments, the power source 30 is configured to provide motive power to the vehicle 2 via wheels 47 of the vehicle 2. According to further embodiments, the power source 30 may be configured to provide motive power to a vehicle via another type of propulsion arrangement. The vehicle 2 further comprises a fuel gas system 1. The fuel gas system 1 is configured to supply fuel gas to the power source 30 of the vehicle 2. The fuel gas system 1 may also be referred to as a fuel gas supply arrangement. In Fig. 1, a first pressure tank 3 and a second pressure tank 5 of the fuel gas system 1 can be seen.

**Fig. 2** schematically illustrates the fuel gas system 1 and the power source 30 of the vehicle 2 illustrated in Fig. 1. Below, simultaneous reference is made to Fig. 1 and Fig. 2, if not indicated otherwise. Also in Fig. 2, the first pressure tank 3 and the second pressure tank 5 of the fuel gas system 1 can be seen. Each of the first and second pressure tank 3, 5 is configured to store the fuel gas at a pressure above ambient pressure. According to the illustrated embodiments, the fuel gas system 1 of the vehicle 2 comprises two pressure tanks 3, 5. However, according to further embodiments, the fuel gas system 1 of the vehicle 2 may comprise another number of pressure tanks 3, 5, such as one, three, four, five or six pressure tanks.

According to the illustrated embodiments, each of the first and second pressure tanks 3, 5 is a cryogenic tank configured to store the fuel gas at least partially in liquid form and at a temperature below ambient temperature, such as at a temperature around -130 degrees Celsius. Moreover, each of the first and second pressure tanks 3, 5 may be configured to store fuel gas in the form of liquefied natural gas, usually abbreviated LNG. Therefore, the first and second pressure tanks 3, 5 as referred to herein, may also be referred to as a first and a second cryogenic tank, a first and a second cryogenic fuel tank, a first and a second cryogenic pressure tank, a first and a second liquefied natural gas tank, or the like.

The fuel gas system 1 comprises a first pressure relief valve rv1 configured to initiate venting of fuel gas from the first pressure tank 3 when the pressure in the first pressure tank 3 reaches above a first threshold pressure. Likewise, the fuel gas system 1 comprises a second pressure relief valve rv2 configured to initiate venting of fuel gas from the second pressure tank 5 when the pressure in the second pressure tank 5 reaches above a second threshold pressure. Purely as examples, each of the first and second threshold pressures may be within the range of 6 - 400 bar, or 6 - 700 bar.

Each of the first and second pressure relief valves rv1, rv2 prevents the build-up of an excessive pressure inside the respective pressure tank 3, 5 by venting fuel gas therefrom when the pressure in the pressure tank 3, 5 reaches above the respective threshold pressure. In this manner, damage to the pressure tanks 3, 5 can be avoided, as well as dangerous situations caused by excessive pressures inside the pressure tanks 3, 5.

The fuel gas system 1 comprises a fuel supply conduit 7 connected to each of the first and second pressure tank 3, 5. The fuel supply conduit 7 may also be referred to as a fuel gas supply conduit 7. In more detail, the fuel gas system 1 comprises a first branch conduit 7' connecting the first pressure tank 3 to the fuel supply conduit 7 and a second branch conduit 7" connecting the second pressure tank 5 to the fuel supply conduit 7. Each of the first and second branch conduits 7', 7" is connected to the fuel supply conduit 7 at a T-connection 17 of the fuel gas system 1. The fuel supply conduit 7 is arranged to conduct fuel gas from each of the first and second pressure tanks 3, 5 in a direction towards the power source 30, as is further explained herein.

The fuel gas system 1 further comprises a first valve v1 arranged between the first pressure tank 3 and the fuel supply conduit 7 and a second valve v2 arranged between the second pressure tank 5 and the fuel supply conduit 7. According to the illustrated embodiments, each of the first and second valves v1, v2 is a so called shut off valve used to shut off, i.e., close, the respective pressure tank 3, 5 when the vehicle 2 comprising the fuel supply conduit 7 is not operated. Each of the first and second valves v1, v2 may comprise a solenoid.

As can be seen in Fig. 2, according to the illustrated embodiments, the first valve v1 is arranged on the first pressure tank 3 and the second valve v2 is arranged on the second pressure tank 5. Thus, according to the illustrated embodiments, the first valve v1 is arranged between the first pressure tank 3 and the first branch conduit 7' and the second valve v2 is arranged between the second pressure tank 5 and the second branch conduit 7".

Each of the first and second valves v1, v2 is controllable between opening states comprising an open state and a closed state. The first valve v1 is configured to block flow of fuel gas from the first pressure tank 3 into the first branch conduit 7', and thereby also into the fuel supply conduit 7, when in the closed state, and is configured to allow a flow of fuel gas from the first pressure tank 3 into the first branch conduit 7', and thereby also into the fuel supply conduit 7 via the T-connection 17, when in the open state. Likewise, second valve v2 is configured to block flow of fuel gas from the second pressure tank 5 into the second branch conduit 7", and thereby also into the fuel supply conduit 7, when in the closed state, and is configured to allow a flow of fuel gas from the second pressure tank 5 into the second branch conduit 7", and thereby also into the fuel supply conduit 7 via the T-connection 17, when in the open state.

According to the illustrated embodiments, the fuel gas system 1 comprises a fuel gas processing unit 14. The fuel gas processing unit 14 may be referred to as a gas panel. According to the illustrated embodiments, the fuel gas processing unit 14 comprises a fuel pressure reducer 16 and a fuel filter 19. The fuel pressure reducer 16 may also be referred to as a regulator, a pressure regulator, or the like, and is configured to reduce the pressure of the fuel gas before the fuel gas is conducted to an inlet 31 of the power source 30.

According to the illustrated embodiments, the power source 30 is an internal combustion engine configured to operate on fuel gas supplied to the power source 30 from the fuel gas system 1. The fuel filter 19 is configured to filter the fuel gas, i.e., may separate particles and unwanted substances from the fuel gas, before the fuel gas is conducted to the inlet 31 of the power source 30.

According to further embodiments, the vehicle 2 may comprise another type of power source configured to provide motive power to the vehicle 2 using fuel gas from the first and second pressure tanks 3, 5 of the fuel gas system 1 of the vehicle 2. An example is a fuel cell system capable of converting the chemical energy from fuel gases like hydrogen directly into electricity through a chemical reaction with oxygen. This electricity can then power a number of electric motors of the vehicle 2 to provide motive power thereof.

As seen in Fig. 2, the fuel supply conduit 7 is connected to the fuel gas processing unit 14. In other words, the fuel supply conduit 7 is configured to conduct fuel gas from each of the first and second pressure tanks 3, 5 to the fuel gas processing unit 14.

As mentioned, according to the illustrated embodiments, each of the first and second pressure tanks 3, 5 is a cryogenic tank configured to store the fuel gas at least partially in liquid form and at a temperature below ambient temperature. The components of the fuel gas processing unit 14 and the power source 30 are sensitive to a supply of fuel gas having a too low temperature.

According to the illustrated embodiments, the fuel gas system 1 comprises a first heat exchanger 11 configured to heat fuel gas flowing from the first pressure tank 3 to the fuel supply conduit 7. Moreover, the fuel gas system 1 comprises a second heat exchanger 12 configured to heat fuel gas flowing from the second pressure tank 5 to the fuel supply conduit 7. According to the illustrated embodiments, the first heat exchanger 11 is arranged on the first pressure tank 3 and the second heat exchanger 12 is arranged on the second pressure tank 5.

According to the illustrated embodiments, the power source 30 comprises a cooling system 32 configured to cool the power source 30 during operation thereof. The cooling system 32 of the power source 30 comprises a radiator 34 configured to transfer heat of coolant of the cooling system 34 to the surroundings. The radiator 34 may for example be mounted at a front portion of a vehicle comprising the power source 30.

According to the illustrated embodiments, each of the first and second heat exchangers 11, 12 is configured to heat fuel gas using heat of the coolant of the cooling system 32 of the power source 30. That is, according to the illustrated embodiments, the fuel gas system 1 comprises a coolant loop 36 connecting each of the first and second heat exchangers 11, 12 to the cooling system 32 of the power source 30.

In this manner, each of the first and second heat exchangers 11, 12 can heat fuel gas from the first and second pressure tank 3, 5 respectively using heat from coolant of the cooling system 32 of the power source 30. As an alternative, or in addition, each of the first and second heat exchangers 11, 12 may heat fuel gas from the first and second pressure tank 3, 5 respectively using heat from another type of system or device, such as from an electrical heater, or the like.

According to the embodiments illustrated in Fig. 2, the coolant of the coolant loop 36 heats the first and second heat exchangers 11, 12 in parallel. According to further embodiments, the coolant of the coolant loop 36 may heat the first and second heat exchangers 11, 12 in series.

According to the illustrated embodiments, the fuel gas system 1 comprises a first level sensor L1. The first level sensor L1 is configured to provide data representative of a current fuel level in the first pressure tank 3. Moreover, according to the illustrated embodiments, the fuel gas system 1 comprises a second level sensor L2. The second level sensor L2 is configured to provide data representative of a current fuel level in the second pressure tank 5.

Each of the first and second level sensors L1, L2 may be configured to measure the dielectric properties of the fuel gas in the respective pressure tank 3, 5 to provide data representative of a current fuel level in the pressure tank 3, 5. Each of the first and second level sensors L1, L2 may comprise two conductive plates, commonly known as electrodes, placed inside the respective pressure tank 3, 5, with the fuel gas in the pressure tank 3, 5 acting as the dielectric medium between them. Furthermore, each of the first and second level sensors L1, L2 may operate on the principle of capacitance variation due to changes in the dielectric constant of the medium, i.e., the fuel gas, surrounding its electrodes. As the fuel level changes within the pressure tank 3, 5, the proportion of the electrodes immersed in the liquid phase versus the gaseous phase alters. Since liquid and gas phases have different dielectric constants, this change affects the capacitance measured between the plates.

As indicated in Fig. 2, the fuel gas system 1 comprises a pressure sensor 15. According to the illustrated embodiments, the pressure sensor 15 is configured to sense the pressure of fuel gas in the fuel supply conduit 7. Moreover, as can be seen in Fig. 2, according to the illustrated embodiments, the pressure sensor 15 is arranged on the fuel gas processing unit 14. The pressure sensor 15 is located downstream of the T-connection 17 and upstream of the fuel pressure reducer 16 and upstream of the fuel filter 19 of the fuel gas processing unit 14. In this manner, the pressure sensor 15 is able to sense a pressure representative of the pressure of fuel gas inside the fuel supply conduit 7 in a direct manner. However, according to further embodiments, the fuel gas system 1 may comprise a pressure sensor located at another portion of the fuel supply conduit 7.

The fuel gas system 1 comprises a control arrangement 21. According to the illustrated embodiments, the control arrangement 21 is operably connected to the first and second valves v1, v2, the first and second level sensors L1, L2, the pressure sensor 15, a control system 21' of the vehicle 2, and a memory 23.

As is further explained herein, the control arrangement 21 is configured to estimate occurrences of venting of fuel gas from the fuel gas system 1 of the vehicle 2. In more detail, according to embodiments herein, the control arrangement 21 is configured to store data in the memory 23 during a shutdown phase of the vehicle 2, wherein the data is representative of current time and date, a current pressure p1 in the first pressure tank 3, a current pressure p2 in the second pressure tank 5, a current fuel level in the first pressure tank 3, and a current fuel level in the second pressure tank 5. The memory 23 may be comprised in the control arrangement 21, in the control system 21' of the vehicle 2, in another part, device, or system of the vehicle 2, or in a device or system external to the vehicle 2.

The control arrangement 21 may be configured to obtain the current time and date from an onboard system, such as from the control system 21' of the vehicle 2 or may be configured to obtain the current time and date from a device or system external to the vehicle 2.

The control arrangement 21 may be configured to obtain data representative of a current pressure p1 in the first pressure tank 3, and a current pressure p2 in the second pressure tank 5 by inputting data from the pressure sensor 15.

The control arrangement 21 may be configured to obtain data representative of a current fuel level in the first pressure tank 3 by inputting data from the first level sensor L1 and may be configured to obtain data representative of a current fuel level in the second pressure tank 5 by inputting data from the second level sensor L2.

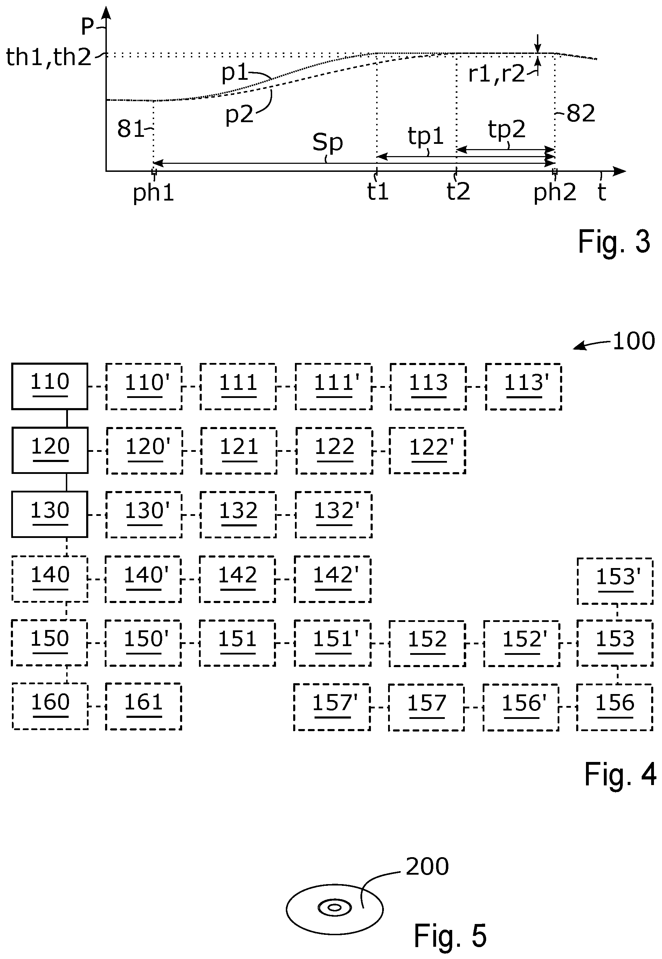

**Fig. 3** illustrates a graph comprising a horizontal axis showing time t and a vertical axis showing current pressures p1, p2 in the first and second pressure tanks 3, 5 respectively. Below, simultaneous reference is made to Fig. 1 - Fig. 3, if not indicated otherwise.

In Fig. 3, a shutdown phase ph1 of the vehicle 2 and a standstill period Sp of the vehicle 2 are indicated. The standstill period Sp last from a start 81 of the standstill period Sp to an end 82 of the standstill period Sp. The standstill period Sp may for example last a number of hours or a number of days.

As seen in, the pressure P1, P2 in the respective first and second pressure tanks 3, 5 declines slightly during a time period up to the start 81 of the standstill period Sp. This is because the vehicle 2 is operated up to the start 81 of the standstill period Sp and fuel gas is consumed from each of the first and second pressure tanks 3, 5.

The shutdown phase ph1 is initiated when the control arrangement 21 receives a vehicle deactivation request. The control arrangement 21 may be configured to receive the vehicle deactivation request from an input unit arranged in a driver environment 40 of the vehicle 2, or from another type of device or system of the vehicle 2, such as an at least partially autonomous driving system of the vehicle 2.

As mentioned, according to the illustrated embodiments, the control arrangement 21 is configured to store data representative of current time and date, a current pressure p1 in the first pressure tank 3, a current pressure p2 in the second pressure tank 5, a current fuel level in the first pressure tank 3, and a current fuel level in the second pressure tank 5, during the shutdown phase ph1 of the vehicle 2. The control arrangement 21 may be configured to store the above mentioned data upon receipt of the vehicle deactivation request.

Moreover, the control arrangement 21 may be configured to control each of the first and second valves v1, v2 to the respective closed state in response to the receipt of the vehicle deactivation request. The control arrangement 21 may be configured to control each of the first and second valves v1, v2 to the respective closed state after storing the above mentioned data or in conjunction with storing the above mentioned data. The control each of the first and second valves v1, v2 to the respective closed state may trigger the start 81 of the standstill period Sp indicated in Fig. 3.

In Fig. 3, a startup phase ph2 of the vehicle 2 is indicated. The startup phase ph2 of the vehicle 2 is initiated when the control arrangement 21 receives a vehicle activation request. The control arrangement 21 may be configured to receive the vehicle activation request from an input unit arranged in a driver environment 40 of the vehicle 2, or from another type of device or system of the vehicle 2, such as an at least partially autonomous driving system of the vehicle 2.

According to embodiments herein, the control arrangement 21 is configured to obtain a first time estimate t1 at which the first pressure relief valve rv1 is estimated to initiate venting based on the stored data and a model for the state of fuel gas in the first pressure tank 3. Moreover, according to the illustrated embodiments, the control arrangement 21 is configured to obtain a second time estimate t2 at which the second pressure relief valve rv2 is estimated to initiate venting based on the stored data and a model for the state of fuel gas in the second pressure tank 5.

The control arrangement 21 may be configured to obtain the first time estimate t1 by calculating the first time estimate t1 based on the stored data and the model for the state of fuel gas in the first pressure tank 3. Likewise, the control arrangement 21 may be configured to obtain the second time estimate t2 by calculating the second time estimate t2 based on the stored data and the model for the state of fuel gas in the second pressure tank 5.

According to the illustrated embodiments, the control arrangement 21 is configured to obtain the first and second time estimates t1, t2 at the startup phase ph2 of the vehicle 2, i.e., in response to the vehicle activation request. However, according to further embodiments, the control arrangement 21 may be configured to obtain one or both of the first and second time estimates t1, t2 at the shutdown phase ph1 or during the standstill period Sp.

The control arrangement 21 is further configured to, after the standstill period Sp, estimate if the first pressure relief valve rv1 has initiated venting during the standstill period Sp by checking if the first time estimate t1 is within the standstill period Sp. Moreover, according to the illustrated embodiments, the control arrangement 21 is configured to, after the standstill period Sp, estimate if the second pressure relief valve rv2 has initiated venting during the standstill period Sp by checking if the second time estimate t2 is within the standstill period Sp.

Thereby, the control arrangement 21 can estimate if fuel gas has been vented from one or both of the first and second pressure tanks 3, 5 during the standstill period Sp in a simple and efficient manner, as is further explained herein. According to the illustrated embodiments, the control arrangement 21 is configured to perform the estimation of whether the first pressure relief valve rv1 has initiated venting, and perform the estimation of whether the second pressure relief valve rv2 has initiated venting, during the startup phase ph2 of the vehicle 2, i.e., upon receipt of the vehicle activation request.

In the illustrated example of Fig. 3, the pressure p1 in the first pressure tank 3 increases in a time period between the start 81 of the standstill period Sp and the first time estimate t1 and the pressure p2 in the second pressure tank 5 increases in a time period between the start 81 of the standstill period Sp and the second time estimate t2. As seen in Fig. 1 and Fig. 2, the first pressure tank 3 is smaller in size than the second pressure tank 5. Therefore, the fuel gas in the first pressure tank 3 experiences a more rapid temperature rise compared to the fuel gas in the second pressure tank 5. Consequently, the pressure p1 in the first pressure tank 3 is subjected to a faster increase than the pressure p2 in the second pressure tank 5.

The pressure p1 in the first pressure tank 3 stops to increase at the first time estimate t1 because the pressure p1 in the first pressure tank 3 reaches the first threshold pressure th1 at which the first pressure relief valve rv1 initiates venting of fuel gas from the first pressure tank 3 to the atmosphere. Likewise, the pressure p2 in the second pressure tank 5 stops to increase at the second time estimate t2 because the pressure p2 in the second pressure tank 5 reaches the second threshold pressure th2 at which the second pressure relief valve rv2 initiates venting of fuel gas from the second pressure tank 5 to the atmosphere.

In other words, in the example depicted in Fig. 3, each of the first and second time estimates t1, t2 is within the standstill period Sp.

According to some embodiments, the control arrangement 21 is configured to, if the first time estimate t1 is within the standstill period Sp, calculate a duration of a time period tp1 between the first time estimate t1 and an end 82 of the standstill period Sp, and estimate an amount of fuel gas vented via the first pressure relief valve rv1 during the standstill period Sp based on the stored data, the model, and the duration of the time period tp1.

Likewise, according to some embodiments, the control arrangement 21 may be configured to, if the second time estimate t2 is within the standstill period Sp, calculate a duration of a time period tp2 between the second time estimate t2 and an end 82 of the standstill period Sp, and estimate an amount of fuel gas vented via the second pressure relief valve rv2 during the standstill period Sp based on the stored data, the model, and the duration of the time period tp2.

Due to these features, the control arrangement 21 can estimate the amount of fuel gas vented via one or both of the first and second pressure relief valves rv1, rv2 during the standstill period Sp in a simple and efficient manner. An estimated amount of fuel gas vented via one or both of the first and second pressure relief valves rv1, rv2 may be given in a weight unit, such as in kilograms.

According to some embodiments, the control arrangement 21 may be configured to input a temperature data estimate to the model, wherein the temperature data estimate is representative estimated ambient temperature during the standstill period Sp. The control arrangement 21 may be configured to receive the temperature data estimate from an onboard system, such as from the control system 21' of the vehicle 2 or may be configured to receive the temperature data estimate from a device or system external to the vehicle 2.

Moreover, according to some embodiments, the control arrangement 21 may be configured to input a fuel gas composition estimate to the model, wherein the fuel gas composition estimate is representative an estimated composition of the fuel gas in the first pressure tank 3 at the shutdown phase ph1 of the vehicle 2. Likewise, the control arrangement 21 may be configured to input a second fuel gas composition estimate to the model, wherein the second fuel gas composition estimate is representative an estimated composition of the fuel gas in the second pressure tank 5 at the shutdown phase ph1 of the vehicle 2.

The control arrangement 21 may be configured to receive a fuel gas composition estimate from an onboard system, such as from the control system 21' of the vehicle 2 or may be configured to obtain a fuel gas composition estimate from a device or system external to the vehicle 2. As an alternative, or in addition, the control arrangement 21 may be configured to obtain a fuel gas composition estimate from an input unit allowing a user to input a fuel gas composition estimate. Such an input unit may for example comprise a fleet management portal, a touch sensitive screen arranged in a driver environment 40 of the vehicle 2, a smart phone, or the like.

The model for the state of fuel gas in the first pressure tank 3 as well as the model for the state of fuel gas in the second pressure tank 5 may be a mathematical model for the state of fuel gas in the respective pressure tank 3, 5. Such a mathematical model for the state of fuel gas in the respective pressure tank 3, 5 may be representative of a physics model for the state of fuel gas in the respective pressure tank 3, 5, for example a simplified physics model thereof. Each model may be based on input according to the above as well as a size of the first and second pressure tanks 3, 5 respectively, an estimated weight of the first and second pressure tanks 3, 5 respectively, an estimated weight of the fuel gas in the first and second pressure tanks 3, 5 respectively, an estimated heat transfer rate from the surroundings into the first and second pressure tanks 3, 5 respectively, and the like.

Moreover, the model for the state of fuel gas in the first pressure tank 3 as well as the model for the state of fuel gas in the second pressure tank 5 may utilize a current volume estimate of fuel gas in the first and second pressure tanks 3, 5 respectively. The current volume estimate of fuel gas in a pressure tank 3, 5 may be calculated using the size of the pressure tank 3, 5 and the current fuel level in the pressure tank 3, 5.

Each model may comprise equations based on the fact that the risk of occurrences of venting of fuel gas from the fuel gas system 1 of the vehicle 2 is proportional to the heat transfer rate from the surroundings into the first and second pressure tanks 3, 5 respectively. Likewise, each model may comprise equations based on the fact that the venting rate of fuel gas from the fuel gas system 1 of the vehicle 2 is proportional to the heat transfer rate from the surroundings into the first and second pressure tanks 3, 5 respectively. The venting rate of fuel gas from the fuel gas system 1 of the vehicle 2 may be given in a unit indicating weight per time, such as for example grams per second, grams per minute, or the like.

According to some embodiments, the control arrangement 21 is configured to, during the startup phase ph2 of the vehicle 2, measure a pressure p1 in the first pressure tank 3, and determine an accuracy of the estimation of whether the first pressure relief valve rv1 has initiated venting during the standstill period Sp based on the measured pressure p1. The control arrangement 21 may be configured to measure a pressure p1 in the first pressure tank 3 by controlling the first valve v1 to the open state before controlling the second valve v2 to the open state and inputting data from the pressure sensor 15 after the control of the first valve v1 to the open state.

As a first example, if it is estimated that the first pressure relief valve rv1 has initiated venting during the standstill period Sp, i.e., if the first time estimate t1 is within the standstill period Sp, but the measured pressure p1 in the first pressure tank 3 is considerably lower than the first threshold pressure th1, it can be concluded that the estimation was not accurate. As a second example, if it is estimated that the first pressure relief valve rv1 has not initiated venting during the standstill period Sp, and if the first time estimate t1 is a certain temporal distance from the end 82 of the standstill period Sp, but the measured pressure p1 in the first pressure tank 3 is close to, or at, the first threshold pressure th1, it can be concluded that the estimation was not accurate.

According to some embodiments, the control arrangement 21 is configured to update at least one parameter of the model for the state of fuel gas in the first pressure tank 3 if the determined accuracy is below a threshold accuracy. The at least one parameter of the model may for example be a gain factor, a variable, or the like, of the model for the state of fuel gas in the first pressure tank 3.

The control arrangement 21 may be further configured to generate a first type of error code if the measured pressure p1 in the first pressure tank 3 is outside of a predetermined pressure range r1 and the first time estimate t1 is within the standstill period Sp. The control arrangement 21 may also be configured to generate a second type of error code if the measured pressure p1 in the first pressure tank 3 is within the predetermined pressure range r1 and the first time estimate t1 is not within the standstill period Sp, wherein the second type of error code is separate and distinguishable from the first type of error conde.

In Fig. 3, the predetermined pressure range r1 for the first pressure tank 3 is indicated. The predetermined pressure range r1 for the first pressure tank 3 is set close to the first threshold pressure th1. The fact that the measured pressure p1 in the first pressure tank 3 is outside of the predetermined pressure range r1 and the first time estimate t1 is within the standstill period Sp indicates that the estimation is erroneous or that the first pressure relief valve rv1 is opening at too low pressures. The fact that the measured pressure p1 in the first pressure tank 3 is within the predetermined pressure range r1 and the first time estimate t1 is not within the standstill period Sp can also indicate that that the estimation is erroneous.

In Fig. 3, a predetermined pressure range r2 for the second pressure tank 5 is also indicated. The predetermined pressure range r2 for the second pressure tank 5 is set close to the second threshold pressure th2. The control arrangement 21 may in the same manner as for the first pressure tank 3 be configured to, during the startup phase ph2 of the vehicle 2, measure a pressure p2 in the second pressure tank 5, and determine an accuracy of the estimation of whether the second pressure relief valve rv2 has initiated venting during the standstill period Sp based on the measured pressure p2. The control arrangement 21 may be configured to measure a pressure p2 in the second pressure tank 5 by controlling the second valve v2 to the open state before controlling the first valve v1 to the open state and inputting data from the pressure sensor 15 after the control of the second valve v2 to the open state.

According to some embodiments, the control arrangement 21 is configured to update at least one parameter of the model for the state of fuel gas in the second pressure tank 5 if the determined accuracy is below a threshold accuracy. The at least one parameter of the model may for example be a gain factor, a variable, or the like, of the model for the state of the fuel gas in the second pressure tank 5.

The control arrangement 21 may be further configured to generate a first and second types of error codes based on the measured pressure p2 in the second pressure tank 5 and the predetermined pressure range r2 for the second pressure tank 5 in the same manner as for the first pressure tank 3.

According to some embodiments, the control arrangement 21 is configured to control the first valve v1 to the open state before controlling the second valve v2 to the open state if the first time estimate t1 precedes the second time estimate t2, and control the second valve v2 to the open state before controlling the first valve v1 to the open state if the first time estimate t1 is after the second time estimate t2. In this manner, the pressure p1, p2 is measured of whichever of the first and second pressure tanks 3, 5 that is most likely to have vented fuel gas from its pressure relief valve rv1, rv2 during the standstill period Sp. In this manner, improved conditions are provided for generating error codes and/or determining an accuracy of an estimation of whether a pressure relief valve rv1, rv2 has initiated venting during a standstill period Sp.

According to some embodiments, the control arrangement 21 may be configured to log the number of times the pressure monitoring of the first and second pressure tanks 3, 5 has been performed. According to such embodiments, the control arrangement 21 may be configured to open one of the first and second pressure tanks 3, 5 based on the fact that the valve v1, v2 of the pressure tank 3, 5 has not been opened before the other valve v1, v2 for a number of times.

According to embodiments herein, the control arrangement 21 may be configured to output one or more of an estimation of whether the first pressure relief valve rv1 has initiated venting during the standstill period Sp, an estimation of whether the second pressure relief valve rv2 has initiated venting during the standstill period Sp, an estimated amount of fuel gas vented via the first pressure relief valve rv1 during the standstill period Sp, an estimated amount of fuel gas vented via the second pressure relief valve rv2 during the standstill period Sp, to an output unit arranged in a driver environment 40 of the vehicle 2, and/or to an external device or system. Such an external device or system may for example be part of a fleet management portal.

The output unit arranged in the driver environment 40 of the vehicle 2 may for example comprise a display, a speaker, or the like. Examples of external devices and systems is a smartphone and an external database, for example an external database holding data of a fleet management portal. By outputting such data to an output unit arranged in a driver environment 40 of the vehicle 2, and/or to an external device or system, the control arrangement 21 allows owners and operators of the vehicle 2 to take necessary measures to prevent future venting of fuel gas from the fuel gas system 1 into the atmosphere. As a further result, conditions are provided for allowing owners and operators to enhance their environmental responsibility and lowering their operational costs for the vehicle 2.

As indicated above, the fuel gas system 1 of the vehicle 2 may comprise another number of pressure tanks 3, 5 than two, such as one pressure tank, or more than two pressure tanks. In embodiments in which the fuel gas system 1 of the vehicle 2 comprises more than two pressure tanks, the control arrangement 21 may be configured to estimate if a pressure relief valve of one or more further pressure tanks of the fuel gas system 1 has initiated venting during the standstill period Sp, in the same manner as described for the first and second pressure tanks 3, 5 above. Likewise, the control arrangement 21 may be configured to estimate an amount of fuel gas vented via the pressure relief valve of such one or more further pressure tanks during the standstill period Sp in the same manner as described for the first and second pressure tanks 3, 5 above.

**Fig. 4** schematically illustrates a method 100 of estimating occurrences of venting of fuel gas from a fuel gas system of a vehicle. The vehicle may be a vehicle 2 as explained with reference to Fig. 1 - Fig. 3. Therefore, below, simultaneous reference is made to Fig. 1 - Fig. 4, if not indicated otherwise.

The method 100 is a method of estimating occurrences of venting of fuel gas from a fuel gas system 1 of a vehicle 2, wherein the fuel gas system 1 is configured to supply fuel gas to a power source 30 of the vehicle 2, and wherein the fuel gas system 1 comprises a first pressure tank 3 and a first pressure relief valve rv1 configured to initiate venting of fuel gas from the first pressure tank 3 when the pressure p1 in the first pressure tank 3 reaches above a first threshold pressure th1. The method 100 comprises the steps of:
- storing 110 data representative of current time and date, a current pressure p1 in the first pressure tank 3, and a current fuel level in the first pressure tank 3 during a shutdown phase ph1 of the vehicle 2,
- obtaining 120 a first time estimate t1 at which the first pressure relief valve rv1 is estimated to initiate venting based on the stored data and a model for the state of fuel gas in the first pressure tank 3, and
after a standstill period Sp starting at the shutdown phase ph1 of the vehicle 2:
- estimating 130 if the first pressure relief valve rv1 has initiated venting during the standstill period Sp by checking if the first time estimate t1 is within the standstill period Sp.

According to some embodiments, the step of obtaining 120 the first time estimate t1 is performed during a startup phase ph2 of the vehicle 2.

Moreover, the step of estimating 130 if the first pressure relief valve rv1 has initiated venting may be performed during a startup phase ph2 of the vehicle 2.

As indicated in Fig. 4, the method 100 may comprise the step of:
- inputting 121 a temperature data estimate to the model, wherein the temperature data estimate is representative estimated ambient temperature during the standstill period Sp.

Moreover, as indicated in Fig. 4, the method 100 may comprise the step of:
- inputting 122 a fuel gas composition estimate to the model, wherein the fuel gas composition estimate is representative an estimated composition of the fuel gas in the first pressure tank 3 at the shutdown phase ph1 of the vehicle 2.

According to some embodiments, the fuel gas system 1 comprises a second pressure tank 5 and a second pressure relief valve rv2 configured to initiate venting of fuel gas from the second pressure tank 5 when the pressure p2 in the second pressure tank 5 reaches above a second threshold pressure th2, wherein the method 100 comprises the steps of:
- storing 110' data representative of a current pressure p2 in the second pressure tank 5 and a current fuel level in the second pressure tank 5 during a shutdown phase ph1 of the vehicle 2,
- obtaining 120' a second time estimate t2 at which the second pressure relief valve rv2 is estimated to initiate venting based on the stored data and a model for the state of fuel gas in the second pressure tank 5, and
after a standstill period Sp starting at the shutdown phase ph1 of the vehicle 2:
- estimating 130' if the second pressure relief valve rv2 has initiated venting during the standstill period Sp by checking if the second time estimate t2 is within the standstill period Sp.

As indicated in Fig. 4, the method 100 may comprise the step of:
- inputting 122' a fuel gas composition estimate to the model for the state of fuel gas in the second pressure tank 5, wherein the fuel gas composition estimate is representative an estimated composition of the fuel gas in the second pressure tank 5 at the shutdown phase ph1 of the vehicle 2.

According to some embodiments, the method 100 comprises the steps of, if the first time estimate t1 is within the standstill period Sp:
- calculating 140 a duration of a time period tp1 between the first time estimate t1 and an end 82 of the standstill period Sp, and
- estimating 142 an amount of fuel gas vented via the first pressure relief valve rv1 during the standstill period Sp based on the stored data, the model, and the duration of the time period tp1.

Moreover, according to some embodiments, the method 100 comprises the steps of, if the second time estimate t2 is within the standstill period Sp:
- calculating 140' a duration of a time period tp2 between the second time estimate t2 and an end 82 of the standstill period Sp, and
- estimating 142' an amount of fuel gas vented via the second pressure relief valve rv2 during the standstill period Sp based on the stored data, the model for the state of fuel gas in the second pressure tank 5, and the duration of the time period tp2.

As indicated in Fig. 4, the method 100 may comprise the step of, during a startup phase ph2 of the vehicle 2,
- measuring 150 a pressure p1 in the first pressure tank 3, and
- determining 152 an accuracy of the estimation of whether the first pressure relief valve rv1 has initiated venting during the standstill period Sp based on the measured pressure p1.

Optionally, the method 100 comprises the step of:
- updating 153 at least one parameter of the model for the state of the fuel gas in the first pressure tank 3 if the determined accuracy is below a threshold accuracy.

According to some embodiments, the method 100 comprises the step of, during a startup phase ph2 of the vehicle 2:
- measuring 150 a pressure p1 in the first pressure tank 3, and
- generating 156 a first type of error code if the measured pressure p1 is outside of a predetermined pressure range r1 and the first time estimate t1 is within the standstill period Sp.

Moreover, according to some embodiments, the method 100 comprises the step of, during a startup phase ph2 of the vehicle 2:
- measuring 150 a pressure p1 in the first pressure tank 3, and
- generating 157 a second type of error code if the measured pressure p1 is within a predetermined pressure range r1 and the first time estimate t1 is not within the standstill period Sp.

Moreover, as indicated in Fig. 4, the method 100 may comprise the step of, during a startup phase ph2 of the vehicle 2,
- measuring 150' a pressure p2 in the second pressure tank 5, and
- determining 152' an accuracy of the estimation of whether the second pressure relief valve rv2 has initiated venting during the standstill period Sp based on the measured pressure p2.

Optionally, the method 100 comprises the step of:
- updating 153' at least one parameter of the model for the state of the fuel gas in the second pressure tank 5 if the determined accuracy is below a threshold accuracy.

According to some embodiments, the method 100 comprises the step of, during a startup phase ph2 of the vehicle 2:
- measuring 150' a pressure p2 in the second pressure tank 5, and
- generating 156' a first type of error code if the measured pressure p2 is outside of a predetermined pressure range r2 and the second time estimate t2 is within the standstill period Sp.

Moreover, according to some embodiments, the method 100 comprises the step of, during a startup phase ph2 of the vehicle 2:
- measuring 150' a pressure p2 in the second pressure tank 5, and
- generating 157' a second type of error code if the measured pressure p2 is within a predetermined pressure range r2 and the second time estimate t2 is not within the standstill period Sp.

Optionally, the fuel gas system 1 comprises a supply conduit 7 configured to supply fuel gas from the first pressure tank 3 to the power source 30 of the vehicle 2, a pressure sensor 15 configured to measure a pressure in the supply conduit 7, and a first valve v1 controllable between an open state and a closed state to open and close a fluid connection between the first pressure tank 3 and the supply conduit 7, and wherein the method 100 comprises the step of:
- controlling 132 the first valve v1 to the open state during a startup phase ph2 of the vehicle 2,
and wherein the step of measuring 150 the pressure p1 in the first pressure tank 3 comprises the step of:
- inputting 151 data from the pressure sensor 15.

Optionally, the fuel gas system 1 comprises a supply conduit 7 configured to supply fuel gas from the second pressure tank 5 to the power source 30 of the vehicle 2, a pressure sensor 15 configured to measure a pressure in the supply conduit 7, and a second valve v2 controllable between an open state and a closed state to open and close a fluid connection between the second pressure tank 5 and the supply conduit 7, and wherein the method 100 comprises the step of:
- controlling 132' the second valve v2 to the open state during a startup phase ph2 of the vehicle 2,
and wherein the step of measuring 150 the pressure p2 in the second pressure tank 5 comprises the step of:
- inputting 151' data from the pressure sensor 15.

According to some embodiments, the fuel gas system 1 comprises a pressure sensor 15 configured to provide data representative of a current pressure p1 in the first pressure tank 3, and wherein the step of storing 110 data during the shutdown phase ph1 of the vehicle 2 comprises the step of:
- storing 111 data from the pressure sensor 15.

According to some embodiments, the fuel gas system 1 comprises a pressure sensor 15 configured to provide data representative of a current pressure p2 in the second pressure tank 5, and wherein the step of storing 110 data during the shutdown phase ph1 of the vehicle 2 comprises the step of:
- storing 111' data from the pressure sensor 15.

Optionally, the fuel gas system 1 comprises a first level sensor L1 configured to provide data representative of a current fuel level in the first pressure tank 3, and wherein the step of storing 110 data during the shutdown phase ph1 of the vehicle 2 comprises the step of:
- storing 113 data from the first level sensor L1.

Likewise, optionally, the fuel gas system 1 comprises a second level sensor L2 configured to provide data representative of a current fuel level in the second pressure tank 5, and wherein the step of storing 110 data during the shutdown phase ph1 of the vehicle 2 comprises the step of:
- storing 113' data from the second level sensor L2.

According to some embodiments, the fuel gas system 1 comprises a supply conduit 7 configured to supply fuel gas from each of the first and second pressure tanks 3, 5 to the power source 30 of the vehicle 2, a first valve v1 controllable between an open state and a closed state to open and close a fluid connection between the first pressure tank 3 and the supply conduit 7, and a second valve v2 controllable between an open state and a closed state to open and close a fluid connection between the second pressure tank 5 and the supply conduit 7, wherein the method 100 comprises the steps of:
- controlling 160 the first valve v1 to the open state before controlling the second valve v2 to the open state if the first time estimate t1 precedes the second time estimate t2, and
- controlling 161 the second valve v2 to the open state before controlling the first valve v1 to the open state if the first time estimate t1 is after the second time estimate t2.

It will be appreciated that the various embodiments described for the method 100 are all combinable with the control arrangement 21 as described herein. That is, the control arrangement 21 may be configured to perform any one of the method steps 110, 110', 111, 111' 113, 113', 120, 120', 121, 122, 122', 130, 130', 132, 132', 140, 140', 142, 142', 150, 150', 151, 151', 152, 152', 153, 153', 156, 156', 157, 157', 160, and 161.

**Fig. 5** illustrates a computer-readable medium 200 comprising instructions which, when executed by a computer, cause the computer to carry out the method 100 according to some embodiments of the present disclosure. According to some embodiments, the computer-readable medium 200 comprises a computer program comprising instructions which, when the program is executed by a computer, cause the computer to carry out the method 100 according to some embodiments. The computer may be comprised in the control arrangement 21.

One skilled in the art will appreciate that the method 100 of estimating occurrences of venting of fuel gas from a fuel gas system 1 of a vehicle 2 may be implemented by programmed instructions. These programmed instructions are typically constituted by a computer program, which, when it is executed in the control arrangement 21, ensures that the control arrangement 21 carries out the desired control, such as the method steps 110, 110', 111, 111' 113, 113', 120, 120', 121, 122, 122', 130, 130', 132, 132', 140, 140', 142, 142', 150, 150', 151, 151', 152, 152', 153, 153', 156, 156', 157, 157', 160, and 161 described herein. The computer program is usually part of a computer program product which comprises a suitable digital storage medium on which the computer program is stored, such as the computer-readable medium 200 illustrated in Fig. 5. In other words, the computer program product may be a computer readable medium 200 and the computer program may be stored in the computer readable medium 200.

The control arrangement 21 may comprise a computer which may take the form of substantially any suitable type of hardware or hardware/firmware device implemented using processing circuity such as, but not limited to, a processor, Central Processing Unit (CPU), a controller, an arithmetic logic unit (ALU), a digital signal processor, an Application Specific Integrated Circuit (ASIC), a circuit for digital signal processing (digital signal processor, DSP), a microcomputer, a field programmable gate array (FPGA), a System-on-Chip (SoC), a programmable logic unit, a microprocessor, an application-specific integrated circuit, or any other device capable of electronically performing operations in a defined manner, or other processing logic that may interpret and execute instructions. The herein utilised expression "computer" may represent a processing circuitry comprising a plurality of processing circuits, such as, e.g., any, some or all of the ones mentioned above.

The control arrangement 21 may further comprise a memory unit, wherein the computer may be connected to the memory unit, which may provide the computer with, for example, stored program code and/or stored data which the computer may need to enable it to do calculations. The computer may also be adapted to store partial or final results of calculations in the memory unit. The memory unit may comprise a physical device utilised to store data or programs, i.e., sequences of instructions, on a temporary or permanent basis. According to some embodiments, the memory unit may comprise integrated circuits comprising silicon-based transistors. The memory unit may comprise e.g. a memory card, a flash memory, a USB memory, a hard disc, or another similar volatile or non-volatile storage unit for storing data such as e.g. ROM (Read-Only Memory), PROM (Programmable Read-Only Memory), EPROM (Erasable PROM), EEPROM (Electrically Erasable PROM), etc. in different embodiments.

The control arrangement 21 is connected to components of the vehicle 2 for receiving and/or sending input and output signals. These input and output signals may comprise waveforms, pulses, or other attributes which the input signal receiving devices can detect as information and which can be converted to signals processable by the control arrangement 21. These signals may then be supplied to the computer. One or more output signal sending devices may be arranged to convert calculation results from the computer to output signals for conveying to other parts of the vehicle's control system and/or the component or components for which the signals are intended. Each of the connections to the respective components of the vehicle 2 for receiving and sending input and output signals may take the form of one or more from among a cable, a data bus, e.g. a CAN (controller area network) bus, a MOST (media orientated systems transport) bus or some other bus configuration, or a wireless connection.

In the embodiments illustrated, the vehicle 2 comprises a control arrangement 21 but might alternatively be implemented wholly or partly in two or more control arrangements, two or more control arrangements, or two or more control units. Moreover, according to some embodiments, at least part of the control arrangement 21 as referred to herein may be arranged external to the vehicle 2, i.e., may be comprised in a device or system being separate from the vehicle 2.

Control systems in modern vehicles generally comprise a communication bus system consisting of one or more communication buses for connecting a number of electronic control units (ECUs), or controllers, to various components on board the vehicle. Such a control system may comprise a large number of control units and taking care of a specific function may be shared between two or more of them. Vehicles and engines of the type here concerned are therefore often provided with significantly more control arrangements than depicted in Fig. 2, as one skilled in the art will surely appreciate.

The computer-readable medium 200 may be provided for instance in the form of a data carrier carrying computer program code for performing at least some of the method steps 110, 110', 111, 111' 113, 113', 120, 120', 121, 122, 122', 130, 130', 132, 132', 140, 140', 142, 142', 150, 150', 151, 151', 152, 152', 153, 153', 156, 156', 157, 157', 160, and 161 according to some embodiments of the method 100 when being loaded into one or more computers of the control arrangement 21. The data carrier may be, e.g. a CD ROM disc, as is illustrated in Fig. 5, or a ROM (read-only memory), a PROM (programable read-only memory), an EPROM (erasable PROM), a flash memory, an EEPROM (electrically erasable PROM), a hard disc, a memory stick, an optical storage device, a magnetic storage device or any other appropriate medium such as a disk or tape that may hold machine readable data in a non-transitory manner.

Accordingly, in some embodiments, the computer-readable medium 200 may be a non-transitory computer-readable medium, such as a tangible electronic, magnetic, optical, infrared, electromagnetic, and/or semiconductor system, apparatus, and/or device. The computer-readable medium 200 may furthermore be provided as computer program code on a server and may be downloaded to the control arrangement 21 remotely, e.g., over an Internet or an intranet connection, or via other wired or wireless communication systems.

It is to be understood that the foregoing is illustrative of various example embodiments and that the invention is defined only by the appended independent claims. A person skilled in the art will realize that the example embodiments may be modified, and that different features of the example embodiments may be combined to create embodiments other than those described herein, without departing from the scope of the present invention, as defined by the appended independent claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A method (100) of estimating occurrences of venting of fuel gas from a fuel gas system (1) of a vehicle (2), wherein the fuel gas system (1) is configured to supply fuel gas to a power source (30) of the vehicle (2), and wherein the fuel gas system (1) comprises a first pressure tank (3) and a first pressure relief valve (rv1) configured to initiate venting of fuel gas from the first pressure tank (3) when the pressure (p1) in the first pressure tank (3) reaches above a first threshold pressure (th1),
**characterised in that** the method (100) comprises the steps of:
- storing (110) data representative of current time and date, a current pressure (p1) in the first pressure tank (3), and a current fuel level in the first pressure tank (3) during a shutdown phase (ph1) of the vehicle (2),
- obtaining (120) a first time estimate (t1) at which the first pressure relief valve (rv1) is estimated to initiate venting based on the stored data and a model for the state of fuel gas in the first pressure tank (3), and
after a standstill period (Sp) starting at the shutdown phase (ph1) of the vehicle (2):
- estimating (130) if the first pressure relief valve (rv1) has initiated venting during the standstill period (Sp) by checking if the first time estimate (t1) is within the standstill period (Sp).

2. The method (100) according to claim 1, wherein the step of obtaining (120) the first time estimate (t1) is performed during a startup phase (ph2) of the vehicle (2).

3. The method (100) according to claim 1 or 2, wherein the step of estimating (130) if the first pressure relief valve (rv1) has initiated venting is performed during a startup phase (ph2) of the vehicle (2).

4. The method (100) according to any one of the preceding claims, wherein the method (100) comprises the step of:
- inputting (121) a temperature data estimate to the model, wherein the temperature data estimate is representative estimated ambient temperature during the standstill period (Sp).

5. The method (100) according to any one of the preceding claims, wherein the method (100) comprises the step of:
- inputting (122) a fuel gas composition estimate to the model, wherein the fuel gas composition estimate is representative an estimated composition of the fuel gas in the first pressure tank (3) at the shutdown phase (ph1) of the vehicle (2).

6. The method (100) according to any one of the preceding claims, wherein the method (100) comprises the steps of, if the first time estimate (t1) is within the standstill period (Sp):
- calculating (140) a duration of a time period (tp1) between the first time estimate (t1) and an end (82) of the standstill period (Sp), and
- estimating (142) an amount of fuel gas vented via the first pressure relief valve (rv1) during the standstill period (Sp) based on the stored data, the model, and the duration of the time period (tp1).

7. The method (100) according to any one of the preceding claims, wherein the method (100) comprises the step of, during a startup phase (ph2) of the vehicle (2),
- measuring (150) a pressure (p1) in the first pressure tank (3), and
- determining (152) an accuracy of the estimation of whether the first pressure relief valve (rv1) has initiated venting during the standstill period (Sp) based on the measured pressure (p1).

8. The method (100) according to claim 7, wherein the method (100) comprises the step of:
- updating (153) at least one parameter of the model if the determined accuracy is below a threshold accuracy.

9. The method (100) according to any one of the preceding claims, wherein the method (100) comprises the step of, during a startup phase (ph2) of the vehicle (2):
- measuring (150) a pressure (p1) in the first pressure tank (3), and
- generating (156) a first type of error code if the measured pressure (p1) is outside of a predetermined pressure range (r1) and the first time estimate (t1) is within the standstill period (Sp).

10. The method (100) according to any one of the preceding claims, wherein the method (100) comprises the step of, during a startup phase (ph2) of the vehicle (2):
- measuring (150) a pressure (p1) in the first pressure tank (3), and
- generating (157) a second type of error code if the measured pressure (p1) is within a predetermined pressure range (r1) and the first time estimate (t1) is not within the standstill period (Sp).

11. The method (100) according to any one of the claims 7 - 10, wherein the fuel gas system (1) comprises:
- a supply conduit (7) configured to supply fuel gas from the first pressure tank (3) to the power source (30) of the vehicle (2),
- a pressure sensor (15) configured to measure a pressure in the supply conduit (7), and
- a first valve (v1) controllable between an open state and a closed state to open and close a fluid connection between the first pressure tank (3) and the supply conduit (7),
and wherein the method (100) comprises the step of:
- controlling (132) the first valve (v1) to the open state during a startup phase (ph2) of the vehicle (2),
and wherein the step of measuring (150) the pressure (p1) in the first pressure tank (3) comprises the step of:
- inputting (151) data from the pressure sensor (15).

12. The method (100) according to any one of the preceding claims, wherein the fuel gas system (1) comprises a pressure sensor (15) configured to provide data representative of a current pressure (p1) in the first pressure tank (3), and wherein the step of storing (110) data during the shutdown phase (ph1) of the vehicle (2) comprises the step of:
- storing (111) data from the pressure sensor (15).

13. The method (100) according to any one of the preceding claims, wherein the fuel gas system (1) comprises a first level sensor (L1) configured to provide data representative of a current fuel level in the first pressure tank (3), and wherein the step of storing (110) data during the shutdown phase (ph1) of the vehicle (2) comprises the step of:
- storing (113) data from the first level sensor (L1).

14. The method (100) according to any one of the preceding claims, wherein the fuel gas system (1) comprises a second pressure tank (5) and a second pressure relief valve (rv2) configured to initiate venting of fuel gas from the second pressure tank (5) when the pressure (p2) in the second pressure tank (5) reaches above a second threshold pressure (th2),
wherein the method (100) comprises the steps of:
- storing (110') data representative of a current pressure (p2) in the second pressure tank (5) and a current fuel level in the second pressure tank (5) during a shutdown phase (ph1) of the vehicle (2),
- obtaining (120') a second time estimate (t2) at which the second pressure relief valve (rv2) is estimated to initiate venting based on the stored data and a model for the state of fuel gas in the second pressure tank (5), and
after a standstill period (Sp) starting at the shutdown phase (ph1) of the vehicle (2):
- estimating (130') if the second pressure relief valve (rv2) has initiated venting during the standstill period (Sp) by checking if the second time estimate (t2) is within the standstill period (Sp).

15. The method (100) according to claim 14, wherein the fuel gas system (1) comprises:
- a supply conduit (7) configured to supply fuel gas from each of the first and second pressure tanks (3, 5) to the power source (30) of the vehicle (2),
- a first valve (v1) controllable between an open state and a closed state to open and close a fluid connection between the first pressure tank (3) and the supply conduit (7), and
- a second valve (v2) controllable between an open state and a closed state to open and close a fluid connection between the second pressure tank (5) and the supply conduit (7),
wherein the method (100) comprises the steps of:
- controlling (160) the first valve (v1) to the open state before controlling the second valve (v2) to the open state if the first time estimate (t1) precedes the second time estimate (t2), and
- controlling (161) the second valve (v2) to the open state before controlling the first valve (v1) to the open state if the first time estimate (t1) is after the second time estimate (t2).

16. A computer program comprising instructions which, when the program is executed by a computer, cause the computer to carry out the method (100) according to any one of the claims 1 - 15.

17. A computer-readable medium comprising instructions which, when executed by a computer, cause the computer to carry out the method (100) according to any one of the claims 1 - 15.

18. A control arrangement (21) configured to estimate occurrences of venting of fuel gas from a fuel gas system (1) of a vehicle (2), wherein the fuel gas system (1) is configured to supply fuel gas to a power source (30) of the vehicle (2), and wherein the fuel gas system (1) comprises a first pressure tank (3) and a first pressure relief valve (rv1) configured to initiate venting of fuel gas from the first pressure tank (3) when the pressure (p1) in the first pressure tank (3) reaches above a first threshold pressure (th1),
**characterised in that** the control arrangement (21) is configured to:
- store data representative of current time and date, a current pressure (p1) in the first pressure tank (3), and a current fuel level in the first pressure tank (3) during a shutdown phase (ph1) of the vehicle (2),
- obtain a first time estimate (t1) at which the first pressure relief valve (rv1) is estimated to initiate venting based on the stored data and a model for the state of fuel gas in the first pressure tank (3), and
after a standstill period (Sp) starting at the shutdown phase (ph1) of the vehicle (2):
- estimate if the first pressure relief valve (rv1) has initiated venting during the standstill period (Sp) by checking if the first time estimate (t1) is within the standstill period (Sp).

19. A vehicle (2) comprising a power source (30) and a fuel gas system (1) configured to supply fuel gas to the power source (30), wherein the fuel gas system (1) comprises a first pressure tank (3) and a first pressure relief valve (rv1) configured to initiate venting of fuel gas from the first pressure tank (3) when the pressure (p1) in the first pressure tank (3) reaches above a first threshold pressure (th1), and wherein the vehicle (2) comprises a control arrangement (21) according to claim 18.

20. The vehicle (2) according to claim 19, wherein the first pressure tank (3) is a cryogenic tank configured to store the fuel gas at least partially in liquid form and at a temperature below ambient temperature.

21. The vehicle (2) according to claim 19 or 20, wherein the vehicle (2) is a heavy road vehicle (2), such as a truck or a bus.

## Patentansprüche

1. Verfahren (100) zum Schätzen, wann Kraftstoffgas aus einem Kraftstoffgassystem (1) eines Fahrzeugs (2) abgelassen wird, wobei das Kraftstoffgassystem (1) dazu eingerichtet ist, eine Antriebsquelle (30) des Fahrzeugs (2) mit Kraftstoffgas zu versorgen, und wobei das Kraftstoffgassystem (1) einen ersten Druckbehälter (3) und ein erstes Überdruckventil (rv1) umfasst, das dazu eingerichtet ist, ein Ablassen von Kraftstoffgas aus dem ersten Druckbehälter (3) einzuleiten, wenn der Druck (p1) im ersten Druckbehälter (3) einen ersten Schwellendruck (th1) überschreitet,
**dadurch gekennzeichnet, dass** das Verfahren (100) die folgenden Schritte umfasst:
- Speichern (110) von Daten, die eine aktuelle Uhrzeit und ein aktuelles Datum, einen aktuellen Druck (p1) im ersten Druckbehälter (3) sowie einen aktuellen Kraftstoffstand im ersten Druckbehälter (3) während einer Abschaltphase (ph1) des Fahrzeugs (2) wiedergeben,
- Erhalten (120) einer ersten Zeitschätzung (t1), zu der das erste Überdruckventil (rv1) voraussichtlich ein Ablassen einleitet, basierend auf den gespeicherten Daten und einem Modell für den Zustand des Kraftstoffgases im ersten Druckbehälter (3), und
nach einem Stillstandzeitraum (Sp), der in der Abschaltphase (ph1) des Fahrzeugs (2) beginnt:
- Schätzen (130), ob das erste Überdruckventil (rv1) während des Stillstandzeitraums (Sp) ein Ablassen eingeleitet hat, durch prüfen, ob die erste Zeitschätzung (t1) innerhalb des Stillstandzeitraums (Sp) liegt.

2. Verfahren (100) nach Anspruch 1, wobei der Schritt, in dem die erste Zeitschätzung (t1) erhalten (120) wird, während einer Startphase (ph2) des Fahrzeugs (2) ausgeführt wird.

3. Verfahren (100) nach Anspruch 1 oder 2, wobei der Schritt des Schätzens (130), ob das erste Überdruckventil (rv1) ein Ablassen eingeleitet hat, während einer Startphase (ph2) des Fahrzeugs (2) ausgeführt wird.

4. Verfahren (100) nach einem der vorangehenden Ansprüche, wobei das Verfahren (100) den folgenden Schritt umfasst:
- Eingeben (121) einer Temperaturdatenschätzung in das Modell, wobei die Temperaturdatenschätzung eine geschätzte Umgebungstemperatur während des Stillstandzeitraums (Sp) wiedergibt.

5. Verfahren (100) nach einem der vorangehenden Ansprüche, wobeidas Verfahren (100) den folgenden Schritt umfasst:
- Eingeben (122) einer Schätzung der Kraftstoffgaszusammensetzung in das Modell, wobei die Schätzung der Kraftstoffgaszusammensetzung eine geschätzte Zusammensetzung des Kraftstoffgases im ersten Druckbehälter (3) in der Abschaltphase (ph1) des Fahrzeugs (2) wiedergibt.

6. Verfahren (100) nach einem der vorangehenden Ansprüche, wobei das Verfahren (100) die folgenden Schritte umfasst, wenn die erste Zeitschätzung (t1) innerhalb des Stillstandzeitraums (Sp) liegt:
- Berechnen (140) einer Dauer eines Zeitraums (tp1) zwischen der ersten Zeitschätzung (t1) und einem Ende (82) des Stillstandzeitraums (Sp) und
- Schätzen (142) einer Menge an Kraftstoffgas, die während des Stillstandzeitraums (Sp) über das erste Überdruckventil (rv1) abgelassen wurde, basierend auf den gespeicherten Daten, dem Modell und der Dauer des Zeitraums (tp1).

7. Verfahren (100) nach einem der vorangehenden Ansprüche, wobei das Verfahren (100) die folgenden Schritte während einer Startphase (ph2) des Fahrzeugs (2) umfasst:
- Messen (150) eines Drucks (p1) im ersten Druckbehälter (3) und
- Bestimmen (152) einer Genauigkeit der Schätzung, ob das erste Überdruckventil (rv1) während des Stillstandzeitraums (Sp) ein Ablassen eingeleitet hat, basierend auf dem gemessenen Druck (p1).

8. Verfahren (100) nach Anspruch 7, wobeidas Verfahren (100) den folgenden Schritt umfasst:
- Aktualisieren (153) wenigstens eines Parameters des Modells, wenn die bestimmte Genauigkeit unter einer Schwellengenauigkeit liegt.

9. Verfahren (100) nach einem der vorangehenden Ansprüche, wobei das Verfahren (100) die folgenden Schritte während einer Startphase (ph2) des Fahrzeugs (2) umfasst:
- Messen (150) eines Drucks (p1) im ersten Druckbehälter (3) und
- Generieren (156) eines Fehlercodes einer ersten Art, wenn der gemessene Druck (p1) außerhalb eines vorbestimmten Druckbereichs (r1) liegt und die erste Zeitschätzung (t1) innerhalb des Stillstandzeitraums (Sp) liegt.

10. Verfahren (100) nach einem der vorangehenden Ansprüche, wobei das Verfahren (100) die folgenden Schritte während einer Startphase (ph2) des Fahrzeugs (2) umfasst:
- Messen (150) eines Drucks (p1) im ersten Druckbehälter (3) und
- Generieren (157) eines Fehlercodes einer zweiten Art, wenn der gemessene Druck (p1) innerhalb eines vorbestimmten Druckbereichs (r1) liegt und die erste Zeitschätzung (t1) nicht innerhalb des Stillstandzeitraums (Sp) liegt.

11. Verfahren (100) nach einem der Ansprüche 7 bis 10, wobei das Kraftstoffgassystem (1) umfasst:
- eine Zufuhrleitung (7), die dazu eingerichtet ist, der Antriebsquelle (30) des Fahrzeugs (2) Kraftstoffgas aus dem ersten Druckbehälter (3) zuzuführen,
- einen Drucksensor (15), der dazu eingerichtet ist, einen Druck in der Zufuhrleitung (7) zu messen, und
- ein erstes Ventil (v1), das zwischen einem geöffneten Zustand und einem geschlossenen Zustand steuerbar ist, um eine Fluidverbindung zwischen dem ersten Druckbehälter (3) und der Zufuhrleitung (7) zu öffnen und zu schließen,
und wobei das Verfahren (100) den folgenden Schritt umfasst:
- Steuern (132) des ersten Ventils (v1) in den geöffneten Zustand während einer Startphase (ph2) des Fahrzeugs (2),
und wobei der Schritt, in dem ein Druck (p1) im ersten Druckbehälter (3) gemessen (150) wird, den folgenden Schritt umfasst:
- Eingeben (151) von Daten vom Drucksensor (15).

12. Verfahren (100) nach einem der vorangehenden Ansprüche, wobei das Kraftstoffgassystem (1) einen Drucksensor (15) umfasst, der dazu eingerichtet ist, Daten bereitzustellen, die einen aktuellen Druck (p1) im ersten Druckbehälter (3) wiedergeben, und wobei der Schritt, in dem während der Abschaltphase (ph1) des Fahrzeugs (2) Daten gespeichert (110) werden, den folgenden Schritt umfasst:
- Speichern (111) von Daten vom Drucksensor (15).

13. Verfahren (100) nach einem der vorangehenden Ansprüche, wobei das Kraftstoffgassystem (1) einen ersten Füllstandsensor (L1) umfasst, der dazu eingerichtet ist, Daten bereitzustellen, die einen aktuellen Kraftstofffiillstand im ersten Druckbehälter (3) wiedergeben, und wobei der Schritt, in dem während der Abschaltphase (ph1) des Fahrzeugs (2) Daten gespeichert (110) werden, den folgenden Schritt umfasst:
- Speichern (113) von Daten vom ersten Füllstandsensor (L1).

14. Verfahren (100) nach einem der vorangehenden Ansprüche, wobei das Kraftstoffgassystem (1) einen zweiten Druckbehälter (5) und ein zweites Überdruckventil (rv2) umfasst, das dazu eingerichtet ist, ein Ablassen von Kraftstoffgas aus dem zweiten Druckbehälter (5) einzuleiten, wenn der Druck (p2) im zweiten Druckbehälter (5) einen zweiten Schwellendruck (th2) überschreitet,
wobei das Verfahren (100) die folgenden Schritte umfasst:
- Speichern (110') von Daten, die einen aktuellen Druck (p2) im zweiten Druckbehälter (5) sowie einen aktuellen Kraftstoffstand im zweiten Druckbehälter (5) während einer Abschaltphase (ph1) des Fahrzeugs (2) wiedergeben,
- Erhalten (120') einer zweiten Zeitschätzung (t2), zu der das zweite Überdruckventil (rv2) voraussichtlich ein Ablassen einleitet, basierend auf den gespeicherten Daten und einem Modell für den Zustand des Kraftstoffgases im zweiten Druckbehälter (5), und
nach einem Stillstandzeitraum (Sp), der in der Abschaltphase (ph1) des Fahrzeugs (2) beginnt:
- Schätzen (130'), ob das zweite Überdruckventil (rv2) während des Stillstandzeitraums (Sp) ein Ablassen eingeleitet hat, durch prüfen, ob die zweite Zeitschätzung (t2) innerhalb des Stillstandzeitraums (Sp) liegt.

15. Verfahren (100) nach Anspruch 14, wobei das Kraftstoffgassystem (1) umfasst:
- eine Zufuhrleitung (7), die dazu eingerichtet ist, der Antriebsquelle (30) des Fahrzeugs (2) Kraftstoffgas aus sowohl dem ersten als auch dem zweiten Druckbehälter (3, 5) zuzuführen,
- ein erstes Ventil (v1), das zwischen einem geöffneten Zustand und einem geschlossenen Zustand steuerbar ist, um eine Fluidverbindung zwischen dem ersten Druckbehälter (3) und der Zufuhrleitung (7) zu öffnen und zu schließen, und
- ein zweites Ventil (v2), das zwischen einem geöffneten Zustand und einem geschlossenen Zustand steuerbar ist, um eine Fluidverbindung zwischen dem zweiten Druckbehälter (5) und der Zufuhrleitung (7) zu öffnen und zu schließen,
wobei das Verfahren (100) die folgenden Schritte umfasst:
- Steuern (160) des ersten Ventils (v1) in den geöffneten Zustand vor dem Steuern des zweiten Ventils (v2) in den geöffneten Zustand, wenn die erste Zeitschätzung (t1) vor der zweiten Zeitschätzung (t2) liegt, und
- Steuern (161) des zweiten Ventils (v2) in den geöffneten Zustand vor dem Steuern des ersten Ventils (v1) in den geöffneten Zustand, wenn die erste Zeitschätzung (t1) nach der zweiten Zeitschätzung (t2) liegt.

16. Computerprogramm mit Befehlen, die, wenn das Programm von einem Computer ausgeführt wird, den Computer dazu veranlassen, das Verfahren (100) nach einem der Ansprüche 1 bis 15 auszuführen.

17. Computerlesbares Medium mit Befehlen, die, wenn sie von einem Computer ausgeführt werden, den Computer dazu veranlassen, das Verfahren (100) nach einem der Ansprüche 1 bis 15 auszuführen.

18. Steueranordnung (21), die dazu eingerichtet ist, zu schätzen, wann Kraftstoffgas aus einem Kraftstoffgassystem (1) eines Fahrzeugs (2) abgelassen wird, wobei das Kraftstoffgassystem (1) dazu eingerichtet ist, eine Antriebsquelle (30) des Fahrzeugs (2) mit Kraftstoffgas zu versorgen, und wobei das Kraftstoffgassystem (1) einen ersten Druckbehälter (3) und ein erstes Überdruckventil (rv1) umfasst, das dazu eingerichtet ist, ein Ablassen von Kraftstoffgas aus dem ersten Druckbehälter (3) einzuleiten, wenn der Druck (p1) im ersten Druckbehälter (3) einen ersten Schwellendruck (th1) überschreitet,
**dadurch gekennzeichnet, dass** die Steueranordnung (21) eingerichtet ist zum:
- Speichern von Daten, die eine aktuelle Uhrzeit und ein aktuelles Datum, einen aktuellen Druck (p1) im ersten Druckbehälter (3) sowie einen aktuellen Kraftstoffstand im ersten Druckbehälter (3) während einer Abschaltphase (ph1) des Fahrzeugs (2) wiedergeben,
- Erhalten einer ersten Zeitschätzung (t1), zu der das erste Überdruckventil (rv1) voraussichtlich ein Ablassen einleitet, basierend auf den gespeicherten Daten und einem Modell für den Zustand des Kraftstoffgases im ersten Druckbehälter (3), und
nach einem Stillstandzeitraum (Sp), der in der Abschaltphase (ph1) des Fahrzeugs (2) beginnt:
- Schätzen, ob das erste Überdruckventil (rv1) während des Stillstandzeitraums (Sp) ein Ablassen eingeleitet hat, durch prüfen, ob die erste Zeitschätzung (t1) innerhalb des Stillstandzeitraums (Sp) liegt.

19. Fahrzeug (2) mit einer Antriebsquelle (30) und einem Kraftstoffgassystem (1), das dazu eingerichtet ist, die Antriebsquelle (30) mit Kraftstoffgas zu versorgen, wobei das Kraftstoffgassystem (1) einen ersten Druckbehälter (3) und ein erstes Überdruckventil (rv1) umfasst, das dazu eingerichtet ist, ein Ablassen von Kraftstoffgas aus dem ersten Druckbehälter (3) einzuleiten, wenn der Druck (p1) im ersten Druckbehälter (3) einen ersten Schwellendruck (th1) überschreitet, und wobei das Fahrzeug (2) eine Steueranordnung (21) nach Anspruch 18 umfasst.

20. Fahrzeug (2) nach Anspruch 19, wobei der erste Druckbehälter (3) ein Kryobehälter ist, der zum Lagern des Kraftstoffgases wenigstens teilweise in flüssiger Form und bei Temperaturen unterhalb der Umgebungstemperatur eingerichtet ist.

21. Fahrzeug (2) nach Anspruch 19 oder 20, wobei es sich bei dem Fahrzeug (2) um ein schweres Straßenfahrzeug (2) wie einen Lastkraftwagen oder Bus handelt.

## Revendications

1. Procédé (100) d'estimation d'occurrences d'évacuation de gaz combustible à partir d'un système de gaz combustible (1) d'un véhicule (2), dans lequel le système de gaz combustible (1) est configuré pour alimenter en gaz combustible une source de puissance (30) du véhicule (2), et dans lequel le système de gaz combustible (1) comprend un premier réservoir sous pression (3) et une première soupape de surpression (rv1) configurée pour lancer l'évacuation de gaz combustible à partir du premier réservoir sous pression (3) lorsque la pression (p1) dans le premier réservoir sous pression (3) dépasse un premier seuil de pression (th1),
**caractérisé en ce que** le procédé (100) comprend les étapes suivantes :
- le stockage (110) de données représentatives de l'heure et de la date actuelles, d'une pression actuelle (p1) dans le premier réservoir sous pression (3), et d'un niveau de carburant actuel dans le premier réservoir sous pression (3) pendant une phase d'arrêt (ph1) du véhicule (2),
- l'obtention (120) d'une première estimation de temps (t1) à laquelle la première soupape de surpression (rv1) est estimée lancer l'évacuation sur la base des données stockées et d'un modèle pour l'état du gaz combustible dans le premier réservoir sous pression (3), et
après une période d'immobilisation (Sp) commençant à la phase d'arrêt (ph1) du véhicule (2) :
- le fait d'estimer (130) si la première soupape de surpression (rv1) a lancé l'évacuation pendant la période d'immobilisation (Sp) en vérifiant si la première estimation de temps (t1) se situe au sein de la période d'immobilisation (Sp).

2. Procédé (100) selon la revendication 1, dans lequel l'étape d'obtention (120) de la première estimation de temps (t1) est réalisée pendant une phase de démarrage (ph2) du véhicule (2).

3. Procédé (100) selon la revendication 1 ou 2, dans lequel l'étape consistant à estimer (130) si la première soupape de surpression (rv1) a lancé l'évacuation est réalisée pendant une phase de démarrage (ph2) du véhicule (2).

4. Procédé (100) selon l'une quelconque des revendications précédentes, dans lequel le procédé (100) comprend l'étape suivante :
- la fourniture en entrée (121) d'une estimation de données de température vers le modèle, dans lequel l'estimation de données de température est représentative d'une température ambiante estimée pendant la période d'immobilisation (Sp).

5. Procédé (100) selon l'une quelconque des revendications précédentes, dans lequel le procédé (100) comprend l'étape suivante :
- la fourniture en entrée (122) d'une estimation de composition de gaz combustible vers le modèle, dans lequel l'estimation de composition de gaz combustible est représentative d'une composition estimée du gaz combustible dans le premier réservoir sous pression (3) à la phase d'arrêt (ph1) du véhicule (2).

6. Procédé (100) selon l'une quelconque des revendications précédentes, dans lequel le procédé (100) comprend les étapes suivantes, si la première estimation de temps (t1) se trouve au sein de la période d'immobilisation (Sp) :
- le calcul (140) d'une durée d'une période de temps (tp1) entre la première estimation de temps (t1) et une fin (82) de la période d'immobilisation (Sp), et
- l'estimation (142) d'une quantité de gaz combustible évacué via la première soupape de surpression (rv1) pendant la période d'immobilisation (Sp) sur la base des données stockées, du modèle et de la durée de la période de temps (tp1).

7. Procédé (100) selon l'une quelconque des revendications précédentes, dans lequel le procédé (100) comprend l'étape suivante, pendant une phase de démarrage (ph2) du véhicule (2),
- la mesure (150) d'une pression (p1) dans le premier réservoir sous pression (3), et
- la détermination (152) d'une précision de l'estimation du fait que la première soupape de surpression (rv1) a lancé l'évacuation pendant la période d'immobilisation (Sp) sur la base de la pression mesurée (p1).

8. Procédé (100) selon la revendication 7, dans lequel le procédé (100) comprend l'étape suivante :
- mise à jour (153) d'au moins un paramètre du modèle si la précision déterminée est inférieure à une précision seuil.

9. Procédé (100) selon l'une quelconque des revendications précédentes, dans lequel le procédé (100) comprend l'étape suivante, pendant une phase de démarrage (ph2) du véhicule (2) :
- la mesure (150) d'une pression (p1) dans le premier réservoir sous pression (3), et
- la génération (156) d'un premier type de code d'erreur si la pression mesurée (p1) est en dehors d'une plage de pressions prédéterminée (r1) et la première estimation de temps (t1) se situe au sein de la période d'immobilisation (Sp).

10. Procédé (100) selon l'une quelconque des revendications précédentes, dans lequel le procédé (100) comprend l'étape suivante, pendant une phase de démarrage (ph2) du véhicule (2) :
- la mesure (150) d'une pression (p1) dans le premier réservoir sous pression (3), et
- la génération (157) d'un deuxième type de code d'erreur si la pression mesurée (p1) est au sein d'une plage de pressions prédéterminée (r1) et la première estimation de temps (t1) ne se situe pas au sein de la période d'immobilisation (Sp).

11. Procédé (100) selon l'une quelconque des revendications 7 à 10, dans lequel le système de gaz combustible (1) comprend :
- un conduit d'alimentation (7) configuré pour l'alimentation en gaz combustible depuis le premier réservoir sous pression (3) jusqu'à la source de puissance (30) du véhicule (2),
- un capteur de pression (15) configuré pour mesurer une pression dans le conduit d'alimentation (7), et
- une première soupape (v1) pouvant être commandée entre un état ouvert et un état fermé afin d'ouvrir et de fermer une connexion fluidique entre le premier réservoir de pression (3) et le conduit d'alimentation (7),
et dans lequel le procédé (100) comprend l'étape suivante :
- la commande (132) de la première soupape (v1) vers l'état ouvert pendant une phase de démarrage (ph2) du véhicule (2),
et dans lequel l'étape de mesure (150) de la pression (p1) dans le premier réservoir de pression (3) comprend l'étape suivante :
- la fourniture en sortie (151) de données provenant du capteur de pression (15).

12. Procédé (100) selon l'une quelconque des revendications précédentes, dans lequel le système de gaz combustible (1) comprend un capteur de pression (15) configuré pour fournir des données représentatives d'une pression actuelle (p1) dans le premier réservoir de pression (3), et dans lequel l'étape de stockage (110) de données pendant la phase d'arrêt (ph1) du véhicule (2) comprend l'étape suivante :
- le stockage (111) des données provenant du capteur de pression (15).

13. Procédé (100) selon l'une quelconque des revendications précédentes, dans lequel le système de gaz combustible (1) comprend un premier capteur de niveau (L1) configuré pour fournir des données représentatives d'un niveau de carburant actuel dans le premier réservoir de pression (3), et dans lequel l'étape de stockage (110) de données pendant la phase d'arrêt (ph1) du véhicule (2) comprend l'étape suivante :
- le stockage (113) des données provenant du premier capteur de niveau (L1).

14. Procédé (100) selon l'une quelconque des revendications précédentes, dans lequel le système de gaz combustible (1) comprend un deuxième réservoir de pression (5) et une deuxième soupape de surpression (rv2) configurée pour lancer l'évacuation de gaz combustible depuis le deuxième réservoir de pression (5) lorsque la pression (p2) dans le deuxième réservoir de pression (5) dépasse une deuxième pression seuil (th2),
dans lequel le procédé (100) comprend les étapes suivantes :
- le stockage (110') de données représentatives d'une pression actuelle (p2) dans le deuxième réservoir de pression (5) et d'un niveau de carburant actuel dans le deuxième réservoir de pression (5) pendant une phase d'arrêt (ph1) du véhicule (2),
- l'obtention (120') d'une deuxième estimation de temps (t2) à laquelle la deuxième soupape de surpression (rv2) est estimée lancer l'évacuation sur la base des données stockées et d'un modèle de l'état du gaz combustible dans le deuxième réservoir de pression (5), et
après une période d'immobilisation (Sp) commençant à la phase d'arrêt (ph1) du véhicule (2) :
- le fait d'estimer (130') si la deuxième soupape de surpression (rv2) a lancé l'évacuation pendant la période d'immobilisation (Sp) en vérifiant si la deuxième estimation de temps (t2) se situe au sein de la période d'immobilisation (Sp).

15. Procédé (100) selon la revendication 14, dans lequel le système de gaz combustible (1) comprend :
- un conduit d'alimentation (7) configuré pour alimenter en gaz combustible, depuis chacun des premier et deuxième réservoirs de pression (3, 5), la source de puissance (30) du véhicule (2),
- une première soupape (v1) pouvant être commandée entre un état ouvert et un état fermé afin d'ouvrir et de fermer une connexion fluidique entre le premier réservoir de pression (3) et le conduit d'alimentation (7), et
- une deuxième soupape (v2) pouvant être commandée entre un état ouvert et un état fermé afin d'ouvrir et de fermer une connexion fluidique entre le deuxième réservoir de pression (5) et le conduit d'alimentation (7),
dans lequel le procédé (100) comprend les étapes suivantes :
- la commande (160) de la première soupape (v1) vers l'état ouvert avant la commande de la deuxième soupape (v2) vers l'état ouvert si la première estimation de temps (t1) précède la deuxième estimation de temps (t2), et
- la commande (161) de la deuxième soupape (v2) vers l'état ouvert avant la commande de la première soupape (v1) vers l'état ouvert si la première estimation de temps (t1) est après la deuxième estimation de temps (t2).

16. Programme d'ordinateur comprenant des instructions qui, lorsque le programme est exécuté par un ordinateur, amènent l'ordinateur à effectuer le procédé (100) selon l'une quelconque des revendications 1 à 15.

17. Support lisible par ordinateur comprenant des instructions qui, lorsqu'elles sont exécutées par un ordinateur, amènent l'ordinateur à effectuer le procédé (100) selon l'une quelconque des revendications 1 à 15.

18. Agencement de commande (21) configuré pour estimer des occurrences d'évacuation de gaz combustible à partir d'un système de gaz combustible (1) d'un véhicule (2), dans lequel le système de gaz combustible (1) est configuré pour alimenter en gaz combustible une source de puissance (30) du véhicule (2), et dans lequel le système de gaz combustible (1) comprend un premier réservoir sous pression (3) et une première soupape de surpression (rv1) configurée pour lancer l'évacuation de gaz combustible à partir du premier réservoir sous pression (3) lorsque la pression (p1) dans le premier réservoir sous pression (3) dépasse un premier seuil de pression (th1),
**caractérisé en ce que** l'agencement de commande (21) est configuré pour :
- stocker des données représentatives de l'heure et de la date actuelles, d'une pression actuelle (p1) dans le premier réservoir sous pression (3), et d'un niveau de carburant actuel dans le premier réservoir sous pression (3) pendant une phase d'arrêt (ph1) du véhicule (2),
- obtenir une première estimation de temps (t1) à laquelle la première soupape de surpression (rv1) est estimée lancer l'évacuation sur la base des données stockées et d'un modèle pour l'état du gaz combustible dans le premier réservoir sous pression (3), et
après une période d'immobilisation (Sp) commençant à la phase d'arrêt (ph1) du véhicule (2) :
- estimer si la première soupape de surpression (rv1) a lancé l'évacuation pendant la période d'immobilisation (Sp) en vérifiant si la première estimation de temps (t1) se situe au sein de la période d'immobilisation (Sp).

19. Véhicule (2) comprenant une source de puissance (30) et un système de gaz combustible (1) configuré pour alimenter en gaz combustible la source de puissance (30), dans lequel le système de gaz combustible (1) comprend un premier réservoir de pression (3) et une première soupape de surpression (rv1) configurée pour lancer l'évacuation de gaz combustible à partir du premier réservoir de pression (3) lorsque la pression (p1) dans le premier réservoir de pression (3) dépasse une première pression seuil (th1), et dans lequel le véhicule (2) comprend un agencement de commande (21) selon la revendication 18.

20. Véhicule (2) selon la revendication 19, dans lequel le premier réservoir de pression (3) est un réservoir cryogénique configuré pour stocker le gaz combustible au moins partiellement sous forme liquide et à une température inférieure à la température ambiante.

21. Véhicule (2) selon la revendication 19 ou 20, dans lequel le véhicule (2) est un véhicule lourd (2), tel qu'un camion ou un bus.
